# EUROPÄISCHE PATENTSCHRIFT

(11) **EP 3 370 973 B1**
(45) Veröffentlichungstag und Bekanntmachung des Hinweises auf die Patenterteilung: **06.04.2022**
(21) Anmeldenummer: 16800895.1
(22) Anmeldetag: 02.11.2016
(51) Int. Cl.: B42D 25/29, B42D 25/455, B42D 25/46, B42D 25/47, B42D 25/48, B41F 19/00, B41F 19/02, B44C 1/16

(54) **VERFAHREN ZUM APPLIZIEREN EINER ÜBERTRAGUNGSLAGE EINER FOLIE AUF EIN SUBSTRAT**
METHOD FOR APPLYING A TRANSFER LAYER OF A FILM TO A SUBSTRATE
ROCÉDÉ D'APPLICATION PERMETTANT D'APPLIQUER UNE COUCHE DE TRANSFERT D'UN FILM SUR UN SUBSTRAT

(30) Priorität: 03.11.2015 DE 102015118841; 31.03.2016 DE 102016105874
(43) Veröffentlichungstag der Anmeldung: 12.09.2018
(73) Patentinhaber: Leonhard Kurz Stiftung & Co. KG, 90763 Fürth (DE)
(72) Erfinder: TRIEPEL, Michael, 90766 Fürth (DE); KOSALLA, Konstantin, 90429 Nürnberg (DE); PFORTE, Klaus, 90522 Oberasbach (DE)
(74) Vertreter: Louis Pöhlau Lohrentz
(86) Internationale Anmeldenummer: PCT/EP2016/076370
(87) Internationale Veröffentlichungsnummer: WO 2017/076872

(56) Entgegenhaltungen:
- EP-A1- 0 433 575
- EP-A1- 0 498 040
- EP-A2- 2 172 347
- WO-A1-2014/005823
- WO-A1-2014/076074
- WO-A2-2012/159871
- DE-A1- 19 858 694
- GB-A- 2 259 888

## Beschreibung

Die Erfindung betrifft ein Verfahren zum Applizieren einer Übertragungslage einer Folie auf ein Substrat.

Beim Applizieren einer Übertragungslage einer Folie von einer Trägerlage der Folie auf ein Substrat, beispielsweise auf ein Sicherheitsdokument oder auf eine Verpackung, werden in der Regel nur Teilbereiche der Übertragungslage auf das Substrat übertragen. Die auf der Trägerlage der Folie verbleibenden Reste der Übertragungslage werden meist verworfen. Da gerade bei Folien zur Dekoration von Sicherheitsdokumenten die Herstellung der Übertragungslage oft sehr aufwändig und teuer ist, stellt die signifikante Menge an nicht verwendeter Übertragungslage einen beträchtlichen Kostenfaktor dar.

Zur Lösung dieses Problems ist es bekannt, nach einem ersten Durchgang des Applizierens einer Trägerlage mit Endlosdesign die aufgewickelte Rolle, die die abgelöste Trägerlage der Folie und die verbliebenen Bereiche der Übertragungslage umfasst, noch einmal als Quelle für einen weiteren Applikationsvorgang zu verwenden, wobei die zweite Applikation in den noch auf der Trägerlage der Folie verbliebenen Bereichen der Übertragungslage zwischen den auf dem Substrat applizierten Bereichen der ersten Applikation erfolgt. Die Erkennung der von der Trägerlage der Folie abgelösten Bereiche der Übertragungslage (Lücken) erfolgt über entsprechende Sensoren, welche dann die insbesondere zweite bzw. jede weitere Applikation steuern.

Solche Verfahren verwenden fest vorgegebene Präge-Layouts entweder in Form eines Heißprägestempels oder in Form eines fest definierten Kleberlayouts mittels Kaltkleber. Eine flexible Variation des Kleberlayouts und damit des Designs der Ausprägung ist so nicht möglich.

Ferner sind solche Verfahren in der Regel nur auf Endlosdesigns anwendbar bzw. zumindest problematisch bei der Applikation von Übertragungslagen mit Einzelbilddesigns.

Aus der WO 2014/005823 A1 ist ein Verfahren und eine Vorrichtung zum Versehen eines Substrats mit einem Aufdruck und einer Transferbeschichtung, sowie ein fertiges Substrat bekannt.

Aus der EP 2 172 347 A2 ist eine Transferfolie zur Verwendung in einem Kaltfolientransferverfahren bekannt.

Aus der WO 2014/076074 A1 ist ein Verfahren zum Erzeugen eines Sicherheitsmerkmals für ein Wert- und/oder Sicherheitsprodukt und ein Wert- und/oder Sicherheitsprodukt bekannt.

Aus der GB 2 259 888 A ist ein Transferfoliendruck bekannt, wobei eine Beschichtung von einer Übertragungsfolie auf ein zu bedruckendes Material aufgebracht wird.

Aus der EP 0 498 040 A1 ist ein Verfahren zum Herstellen von Dokumenten mit Sicherheitsmarken bekannt.

Die DE 198 58 694 A1 betrifft die Verwendung reaktiv aushärtender Kleberkomponenten in Schmelzklebern für die Kartonagenverpackung.

Aus der EP 0 433 575 A1 ist eine Vorrichtung zum Aufkleben von Marken aus einer Prägefolie bekannt.

Aus der WO 2012/159871 A2 ist ein Verfahren und eine Vorrichtung zum Heißprägen bekannt.

Aufgabe der vorliegenden Erfindung ist es daher, ein Verfahren zum Applizieren einer Übertragungslage einer Folie bereitzustellen, mit dem eine besonders materialsparende und gleichzeitig flexible Applikation der Übertragungslage ermöglicht wird.

Diese Aufgabe wird durch den Gegenstand der Ansprüche 1 und 3 gelöst.

Zur Durchführung eines erfindungsgemäßen Verfahrens ist eine Applikationsvorrichtung geeignet, welche die folgenden Komponenten umfasst:
- eine Vorratsrolle zum Bereitstellen der Folie;
- einen Tintenstrahldruckkopf zum bereichsweisen Aufbringen einer radikalisch härtbaren Klebstoffs auf die Übertragungslage und/oder auf das Substrat;
- eine in Förderrichtung der Folie stromabwärts von dem Tintenstrahldruckkopf angeordnete erste UV-Lichtquelle zum Vorhärten des Klebstoffs durch UV-Bestrahlung;
- eine in Förderrichtung der Folie stromabwärts von der ersten UV-Lichtquelle angeordnete Walzenanordnung zum Aufbringen der Übertragungslage auf das Substrat;
- eine in Förderrichtung der Folie stromabwärts von der Walzenanordnung angeordnete zweite UV-Lichtquelle zum Aushärten des Klebstoffs durch UV-Bestrahlung;
- eine in Förderrichtung der Folie stromabwärts von der zweiten UV-Lichtquelle angeordnete Abzieheinheit zum Abziehen einer Trägerlage der Folie, wobei zumindest ein erster Teilbereich der Übertragungslage auf einem Applikationsbereich des Substrats verbleibt und zumindest ein zweiter Teilbereich der Übertragungslage auf der Trägerlage verbleibt;
- zumindest einen ersten Sensor zum Erfassen eines Positionierungsmerkmals auf der Folie und/oder einer Transportvorrichtung für die Folie.

Eine alternative Applikationsvorrichtung die zur Durchführung des erfindungsgemäßen Verfahrens geeignet ist, umfasst:
- eine Vorratsrolle zum Bereitstellen der Folie;
- einen in Förderrichtung der Folie stromabwärts von der Vorratsrolle angeordneten Tintenstrahldruckkopf zum Aufbringen einer radikalisch härtbaren Klebstoffs und/oder eine Druckvorrichtung zum Aufbringen eines thermoplastischen Toners auf zumindest einen Teilbereich der Übertragungslage;
- zumindest eine in Förderrichtung der Folie stromabwärts von dem Tintenstrahldruckkopf und/oder der Druckvorrichtung angeordnete Walzenanordnung zum Aufbringen des zumindest einen mit Klebstoff und/oder Toner versehenen Teilbereichs der Übertragungslage auf das Substrat;
- eine in Förderrichtung der Folie stromabwärts von der Walzenanordnung angeordnete Abzieheinheit zum Abziehen einer Trägerlage der Folie von dem zumindest einen Teilbereich der Übertragungslage, wobei zumindest ein erster Teilbereich der Übertragungslage auf einem Applikationsbereich des Substrats verbleibt und zumindest ein zweiter Teilbereich der Übertragungslage auf der Trägerlage verbleibt;
- zumindest einen ersten Sensor zum Erfassen eines Positionierungsmerkmal auf der Folie und/oder einer Transportvorrichtung für die Folie.

Sowohl im Rahmen des Verfahrens als auch der Applikationsvorrichtung können die Verwendung von UV-härtenden Klebstoffen und thermoplastischen Tonern auch beliebig kombiniert werden.

Mittels des beschriebenen Verfahrens und der beschriebenen Applikationsvorrichtung kann einerseits mittels des verwendeten digitalen Tintenstrahldruckverfahrens das Prägedesign flexibel gestaltet werden.

Andererseits kann, wenn es das Folienlayout nach der ersten Applikation erlaubt, die Folie mehrfach verwendet werden und noch nicht transferierte Bereiche der Übertragungslage in weiteren Applikationsschritten auf das selbe oder auf ein anderes Substrat transferiert werden.

Damit ist es möglich, beliebig geformte Bereiche der Übertragungslage zu applizieren und gleichzeitig die Materialausnutzung der Übertragungslage zu optimieren, so dass möglichst wenig Material verworfen werden muss.

Das Substrat kann opak, semitransparent oder transparent sein. Dadurch lassen sich besondere optische Erscheinungsbilder und Effekte in Kombination mit der applizierten Übertragungslage der Folie, insbesondere bei Auflichtbetrachtung, Durchlichtbetrachtung, einer Hinterleuchtung, Durchleuchtung und/oder Beleuchtung erzielen.

Die Übertragungslage der Folie kann vielfältige Dekore oder Motive aufweisen. Beispielsweise können diese Dekore oder Motive einfarbig sein und/oder mit einem mehrfarbigen Endlosmuster und/oder mehrfarbigen registrierten Einzelbildmuster versehen sein. Ein solches Einzelbildmuster kann insbesondere registergenau auf dem Substrat positioniert sein.

Die Dekore oder Motive können dabei zumindest bereichsweise opake, semitransparente oder transparente Bereiche aufweisen, die jeweils auch mit Farbstoffen und/oder Farbpigmenten und/oder Metallicpigmenten und/oder optisch variablen Effektpigmenten versehen sein können.

Die Dekore oder Motive können weiterhin zumindest bereichsweise mit einer insbesondere aufgedampften spiegelnden Reflexionsschicht, insbesondere aus Metall wie beispielsweise Aluminium oder Kupfer oder Chrom oder Legierungen davon versehen sein, um besondere optische Effekte zu erzeugen. Es ist dabei bevorzugt, wenn die Reflexionsschicht durch Sputtern, Bedampfen oder Gasphasenabscheidung aufgebracht wird. Hierdurch können Reflexionsschichten mit guter Qualität und besonders konstanter Schichtdicke erhalten werden. Bevorzugt wird dabei die Reflexionsschicht partiell aufgebracht. Dies kann beispielsweise durch die Verwendung einer Maske oder einer zuvor aufgebrachten entfernbaren partiellen Lackschicht während des Auftrags der Reflexionsschicht erfolgen. Alternativ ist es auch möglich, dass die Reflexionsschicht zunächst vollflächig aufgebracht wird und anschließend strukturiert wird. Das Strukturieren kann dabei beispielsweise durch Ätzen erfolgen. Das Ätzmittel wird abhängig von der Zusammensetzung der Reflexionsschicht gewählt und nur in den zu entfernenden Bereichen der Reflexionsschicht in Kontakt mit dieser gebracht. Dies kann beispielsweise durch partielles Maskieren der Reflexionsschicht mit einem Ätzresist oder auch durch partielles Aufdrucken des Ätzmittels erfolgen.

Die Dekore oder Motive können weiterhin zumindest bereichsweise eine Replikationsschicht mit optisch wirksamen, beispielsweise diffraktiven und/oder refraktiven Reliefstrukturen versehen sein. Die Schichtdicke der Replizierschicht liegt im Bereich von 50 nm bis 50 µm, bevorzugt im Bereich von 200 nm bis 1 µm. Insbesondere können die Reliefstrukturen ein vorzugsweise lineares oder gekreuztes sinusförmiges Beugungsgitter, ein lineares oder gekreuztes ein- oder mehrstufiges Rechteckgitter, eine Beugungsstruktur Nullter Ordnung, eine asymmetrische Reliefstruktur, ein Blaze-Gitter, eine vorzugsweise isotrope oder anisotrope, Mattstruktur, oder eine lichtbeugende und/oder lichtbrechende und/oder lichtfokussierende Mikro- oder Nanostruktur, eine binäre oder kontinuierliche Fresnelllinsen, eine binäre oder kontinuierliche Fresnel-Freiformfläche, eine Mikroprismenstruktur oder eine Kombinationsstruktur daraus aufweisen.

Zweckmäßigerweise beträgt dabei eine Schichtdicke der Trägerfolie von 6 µm bis 100 µm, bevorzugt von 12 µm bis 50 µm.

Es ist ferner bevorzugt, wenn die Folie eine Schutzschicht, insbesondere aus einem UV-härtenden Lack, aus PVC, Polyester oder einem Acrylat, umfasst, die zwischen der Trägerlage und der Übertragungslage angeordnet ist. Im Gegensatz zur Trägerlage verbleibt eine solche Schutzschicht vorzugsweise an der Übertragungslage, wenn dieser auf das Substrat aufgebracht wird und bildet dort dessen äußere Oberfläche. Die Schutzschicht kann die empfindlichen weiteren Schichten der Übertragungslage also vor Umwelteinflüssen, Verschmutzung, Kratzern und dergleichen schützen. Diese zusätzliche Schutzschicht kann auch mit einem Oberflächenrelief versehen sein. Hiermit können zusätzliche interessante optische und/oder funktionale Effekte wie beispielsweise taktil erscheinende Flächen oder dynamische Mattverläufe mit beispielsweise einer Dekorfarbe kombiniert werden. Ein solcher kombinierter Effekt, welcher ein Oberflächenrelief mit einem Druckelement verbindet, erhöht die visuelle Attraktivität und/oder die sich ergebende Funktionalität. Dabei ist es zweckmäßig, wenn eine Schichtdicke der Schutzschicht von 1 µm bis 20 µm, bevorzugt von 3 µm bis 10 µm beträgt. Ein solches Oberflächenrelief kann beispielsweise so in die Schutzschicht eingebracht werden, dass eine Negativform dieses Oberflächenreliefs in die Oberfläche einer Walze eingebracht, insbesondere graviert, geätzt oder mittels Einlageelemente eingebracht wird. Die daran anliegende Schutzschicht der Folie wird während des Applizierens gegen diese Werkzeughälfte gedrückt und das Oberflächenrelief formt sich entsprechend in der Schutzschicht ab.

In einer weiteren Ausführungsform weist die Folie eine Ablöseschicht auf, insbesondere aus einer Wachsschicht und/oder einem stark verfilmenden Acrylat, die zwischen der Trägerlage und der Schutzschicht angeordnet ist. Eine solche Ablöseschicht ermöglicht das einfache und beschädigungsfreie Ablösen der Übertragungslage von der Trägerlage beim Aufbringen der Übertragungslage auf das Substrat. Dabei beträgt zweckmäßigerweise eine Schichtdicke der Ablöseschicht von 5 nm bis 1 µm, bevorzugt von 10 nm bis 1 µm.

Ferner weist die Folie bevorzugt eine Haftvermittlerschicht auf, die auf der der Trägerlage abgewandten Seite der Reflexionsschicht angeordnet ist. Hierbei kann es sich um einen Heißkleber, einen Kaltkleber, einen optisch oder thermisch aktivierbaren Kleber, einen UV-aktivierbaren Kleber oder dergleichen handeln, der eine gute Haftung des Klebstoffs auf der Folie erlaubt. Zweckmäßigerweise beträgt dabei eine Schichtdicke der Kleberschicht von 50 nm bis 50 µm, bevorzugt von 0,5 µm bis 10 µm.

In einer bevorzugten Ausführungsform werden die Dekore oder Motive zumindest bereichsweise durch Drucken, insbesondere durch Siebdruck, Tiefdruck, Inkjet, Stahlstichtiefdruck (Intagliodruck) oder Offsetdruck, aufgebracht wird. Die genannten Druckverfahren können dabei auch miteinander kombiniert werden, um beispielsweise Dekore oder Motive mit mehreren Drucklagen und komplexen optischen Effekten zu erzeugen. Alternativ oder zusätzlich können die Dekore oder Motive zumindest bereichsweise durch Lackieren, Gießen, Tauchen und/oder Bedampfen aufgebracht werden. Insbesondere Dünnfilmschichtsysteme bestehend aus mehreren Schichten.

Unter bereichsweisem Aufbringen des Klebstoffs wird dabei verstanden, dass der Klebstoff in einem ersten Bereich der Übertragungslage und/oder des Substrats aufgebracht wird, während in einem zweiten Bereich der Übertragungslage und/oder des Substrats kein Klebstoff aufgebracht wird.

Vorzugsweise wird hierzu ein digitaler Datensatz zur Ansteuerung des Tintenstrahldruckkopfs bereitgestellt wird, in welchem definiert ist, in welchen Bereichen und/oder mit welcher Auftragsmenge der Klebstoff aufzubringen ist.

Die Vorhärtung des radikalisch härtbaren Klebstoffs verbessert dabei die Auftragsqualität. Insbesondere wird hierdurch die Viskosität des Klebstoffs erhöht, bevor die Übertragungslage in der Walzenanordnung auf das Substrat gepresst wird. Dies vermeidet ein Verlaufen oder zu starkes Verquetschen der aufgebrachten Klebstoffpixel bei der Übertragung, so dass eine besonders randscharfe Applikation der Übertragungslage auf das Substrat und eine besonders hohe Oberflächenqualität der übertragenen Schichten erzielt wird. Dabei ist ein geringfügiges Verquetschen der Klebstoffpixel durchaus wünschenswert, um direkt benachbarte Klebstoffpixel einander anzunähern und zu vereinigen. Dies kann vorteilhaft sein, um beispielsweise bei geschlossenen Flächen und/oder an Motivrändern eine Pixeligkeit der Darstellung zu vermeiden, d.h. zu vermeiden, dass einzelne Pixel störend optisch in Erscheinung treten. Das Verquetschen darf dabei nur so weit erfolgen, dass die gewünschte Auflösung nicht zu stark verringert wird.

Der besonders randscharfe Auftrag der Übertragungslage im Rahmen des beschriebenen Verfahrens stellt zudem sicher, dass auch die nach der Applikation auf der Trägerlage verbleibenden Bereiche der Übertragungslage gut und randscharf definiert sind, so dass praktisch keine für eine weitere Applikation nicht nutzbaren Bereiche der Übertragungslage entstehen.

Gegenüber kationisch härtenden Klebstoffen bietet die Verwendung von radikalisch härtbaren Klebstoffen zudem den Vorteil einer besonders schnellen Aushärtung, was die Vorhärtung des Klebstoffs vor der Folienapplikation erst ermöglicht. Ferner bilden sich bei der radikalischen Aushärtung im Gegensatz zu kationischen Systemen keine Säuren, so dass keine Einschränkungen des verwendbaren Substrats bezüglich der Säureverträglichkeit vorliegen.

Dabei ist es möglich, sowie Folien mit Endlosdesign als auch Folien mit Einzelbilddesigns zu verwenden, wobei jeweils die Ausprägung registergenau erfolgen kann. Die Folie kann also so positioniert werden, dass insbesondere ein Einzelbild genau an der vorgegebenen Stelle auf das Substrat transferiert wird. Hierzu muss gleichermaßen der UV-Kleber an der richtigen Position der Folie bzw. des Substrats, insbesondere registergenau zum Einzelbild, auf die Folie bzw. das Substrat aufgedruckt werden, um dann das Einzelbild mit Hilfe des Klebers registergenau auf das Substrat transferieren zu können.

Dies ist insbesondere deswegen möglich, da im Rahmen des beschriebenen Verfahrens drei Kriterien, nämlich die Position des Substrats, die Position der Folie und die Position des Kleber-Drucks auf der Folie oder auf das Substrat kontrolliert werden können.

Hierzu ist es vorteilhaft, wenn mittels zumindest eines ersten Sensors ein Positionierungsmerkmal auf der Folie und/oder einer Transportvorrichtung für die Folie detektiert wird und zumindest eine erste Positionsinformation bezüglich der Folie erzeugt wird.

Anhand dieser Positionsinformation kann eine Ansteuerung der Vorrichtung erfolgen, die die gewünschte Relativpositionierung zwischen Folie, Substrat und Kleber sicherstellt.

Es ist dabei vorteilhaft, wenn die erste Positionsinformation eine Lage und/oder Ausdehnung der auf der Trägerlage verbliebenen Übertragungslage umfasst.

Anhand dieser Positionsinformation kann sichergestellt werden, dass bei mehrfachen Applikationsläufen das gewünschte Design vollständig und bei optimaler Materialausnutzung übertragen wird.

Weiter ist es bevorzugt, wenn mittels zumindest eines zweiten Sensors ein Positionierungsmerkmal auf dem Substrat und/oder einer Transportvorrichtung für das Substrat detektiert wird und zumindest eine zweite Positionsinformation bezüglich des Substrats erzeugt wird.

Diese Positionsinformation kann für sich allein oder auch in Kombination mit weiteren Positionsinformationen zur Steuerung der Vorrichtung bzw. der Folienapplikation genutzt werden. Das Erzeugen der zweiten Positionsinformation ist insbesondere dann vorteilhaft, wenn die Folie registerhaltig zu weiteren Design- oder Funktionselementen des Substrats appliziert werden soll.

Es ist dabei vorteilhaft, wenn das Positionierungsmerkmal auf dem Substrat und/oder das Positionierungsmerkmal auf der Folie eine bei der Herstellung des Substrats bereitgestellte Passermarke und/oder eine mittels des Tintenstrahldruckkopfs aufgebrachte Passermarke und/oder ein Designmerkmal des Substrats und/oder der Folie und/oder eine Bogenkante des Substrats und/oder der Folie ist oder umfasst.

Die Form und Gestaltung des Positionierungsmerkmals auf der Folie oder dem Substrat ist somit im Wesentlichen frei wählbar, so dass das beschriebene Verfahren keinerlei Designeinschränkungen notwendig macht.

Es ist weiter vorteilhaft, wenn mittels zumindest eines dritten Sensors ein Positionierungsmerkmal auf der Folie und/oder einer Transportvorrichtung für die Folie im Bereich des Tintenstrahldruckkopfs detektiert wird und zumindest eine dritte Positionsinformation bezüglich der Folie erzeugt wird.

Hierdurch kann die Relativposition zwischen Tintenstrahldruckkopf und Folie besonders genau eingestellt werden, da so die exakte Lage der Folie im direkten Nahbereich des Tintenstrahldruckkopfs erfasst wird. Dies stellt einen besonders präzisen Klebstoffauftrag sicher.

Ferner ist es zweckmäßig, wenn zumindest eine der ersten, zweiten, dritten Positionsinformationen auf Grundlage vorher an die Transportvorrichtung für das Substrat und/oder die Transportvorrichtung für die Folie und/oder den Tintenstrahldruckkopf übermittelter Steuerbefehle erzeugt und/oder korrigiert und/oder verifiziert wird.

Auf diese Weise kann die Folien- und/oder Substratposition ausgehend von einer bekannten Ausgangsposition und den bisher durchgeführten Transportoperationen von Folie oder Substrat bestimmt werden. Dies kann einerseits genutzt werden, um auf Sensoren zu verzichten, andererseits kann so eine zusätzliche Information generiert werden, die zur Kontrolle und/oder zum Abgleich der Sensordaten verwendet werden kann.

Es ist dabei vorteilhaft, wenn der zumindest eine Teilbereich und/oder der zumindest eine weitere Teilbereich in Abhängigkeit von zumindest einer der Positionsinformationen in eine definierte Relativlage zum Tintenstrahldruckkopf und/oder zu dem Applikationsbereich des Substrats gebracht wird.

Mit anderen Worten kann so aufgrund der Positionsinformationen die gewünschte registergenaue Übertragung des Teilbereichs der Übertragungslage auf den Applikationsbereich des Substrats gewährleistet werden.

Unter Registergenauigkeit oder auch Passergenauigkeit ist eine Lagegenauigkeit zweier oder mehr Elemente und/oder Bereiche und/oder Schichten relativ zueinander zu verstehen. Dabei soll sich die Registergenauigkeit innerhalb einer vorgegebenen Toleranz bewegen und dabei möglichst gering sein. Gleichzeitig ist die Registergenauigkeit von mehreren Elementen und/oder Schichten zueinander ein wichtiges Merkmal, um die Fälschungssicherheit zu erhöhen. Die lagegenaue Positionierung kann dabei insbesondere mittels optisch detektierbarer Passermarken oder Registermarken erfolgen. Diese Passermarken oder Registermarken können dabei entweder spezielle separate Elemente oder Bereiche oder Schichten darstellen oder selbst Teil der zu positionierenden Elemente oder Bereiche oder Schichten sein.

Insgesamt stehen bis zu drei Eingangsgrößen - also die Messdaten des zumindest einen ersten bis dritten Sensors - und drei Stellgrößen, insbesondere der Vorschub von Folie und Substrat sowie die Positionierung des Tintenstrahldruckkopfs für die Steuerung bzw. Regelung der Applikationsvorrichtung zur Verfügung. Hieraus resultieren mehrere Möglichkeiten zur Implementierung der Steuerungs- bzw. Regelungslogik.

Zum einen ist es möglich, dass die Transportvorrichtung für die Folie in Abhängigkeit von der zumindest einen zweiten Positionsinformation gesteuert oder geregelt wird.

Dabei ist es zweckmäßig, wenn die Transportvorrichtung für das Substrat und/oder der Tintenstrahldruckkopf in Abhängigkeit von einer Steuerinformation für die Transportvorrichtung für die Folie und der ersten und/oder dritten Positionsinformation gesteuert und/oder geregelt wird.

In diesem Fall dient also die zweite Positionsinformation, also die das Substrat betreffende Information, als Master-Eingangsgröße, in Abhängigkeit von welcher die Steuerung erfolgt. Dies kann wiederum auf verschiedene Art implementiert werden.

Zunächst ist es möglich, eine Steuerung mit dem Druckmarkensensor des Substrates, also dem zweiten Sensor, zu implementieren, nach dem der Vorschub der Folie sowie auch der Tintenstrahldruckkopf gesteuert werden.

Alternativ kann der Druckmarkensensor des Substrates zur Steuerung verwendet werden und in Abhängigkeit davon eine Regelung der Folie und anschließende Regelung bzw. Ansteuerung des Tintenstrahldruckkopfs durch die Folienmarke, also die Messwerte des ersten Sensors erfolgen.

Auf eine Regelung des Transports der Folie kann auch verzichtet werden. Hier erfolgt lediglich ein Regeln des Druckes durch die Folienmarke, also den ersten Sensor, oder auch durch die Druckmarke des Substrates, also den zweiten Sensor.

Ferner kann eine Steuerung mit dem Druckmarkensensor des Substrates auch noch mit einer Regelung der Folie auf Grundlage der Daten des zweiten Sensors implementiert werden, wobei auf ein Regeln des Druckes verzichtet werden kann.

Alternativ kann die Transportvorrichtung für das Substrat auch in Abhängigkeit von der zumindest einen ersten Positionsinformation bezüglich der Folie gesteuert oder geregelt werden.

Dabei ist es zweckmäßig, wenn die Transportvorrichtung für die Folie und/oder der Tintenstrahldruckkopf in Abhängigkeit von einer Steuerinformation für die Transportvorrichtung für das Substrat und der zweiten und/oder dritten Positionsinformation gesteuert und/oder geregelt wird.

In diesem Fall dient also die erste Positionsinformation, also die die Folie betreffende Information, als Master-Eingangsgröße, in Abhängigkeit von welcher die Steuerung erfolgt. Dies kann ebenfalls wiederum auf verschiedene Art implementiert werden.

Auch hier ist es möglich, eine Steuerung mit dem Druckmarkensensor der Folie, also dem ersten Sensor, zu implementieren, nach dem der Vorschub des Substrats sowie auch der Tintenstrahldruckkopf gesteuert werden.

Alternativ kann der Druckmarkensensor der Folie zur Steuerung verwendet werden und in Abhängigkeit davon eine Regelung des Substratvorschubs und anschließende Regelung bzw. Ansteuerung des Tintenstrahldruckkopfs durch die Substratmarke, also die Messwerte des zweiten Sensors erfolgen.

Auf eine Regelung des Transports des Substrats kann auch verzichtet werden. Hier erfolgt lediglich ein Regeln des Druckes durch das Substrat, also den zweiten Sensor, oder auch durch die Druckmarke der Folie, also den ersten Sensor.

Ferner kann eine Steuerung mit dem Druckmarkensensor der Folie auch noch mit einer Regelung des Substrats auf Grundlage der Daten des ersten Sensors implementiert werden, wobei auf ein Regeln des Druckes verzichtet werden kann.

Es ist weiter bevorzugt, wenn eine Dehnung der Folie mittels der Transporteinrichtung auf einen Wert von 3 %o eingestellt wird.

Eine gewisse Grunddehnung der Folie ist grundsätzlich notwendig, um eine exakte Führung zu gewährleisten. Variationen der Dehnung können genutzt werden, um den Folientransport zu kontrollieren und eine exakte Passerung zwischen Folie, Druckkopf und Substrat einzustellen.

Dabei ist es zweckmäßig, wenn zum Einstellen der definierten Relativlage zwischen Folie und Substrat und/oder Tintenstrahldruckkopf die Dehnung der Folie mittels der Transporteinrichtung auf Grundlage zumindest einer der Positionsinformationen variiert wird.

Bevorzugt wird zum Aufbringen des Klebstoffs ein Tintenstrahldruckkopf mit einer Auflösung von 300 bis 1200 Auftragsdüsen pro Zoll (npi, nozzles per inch) verwendet. Hierdurch wird ein hochauflösender Auftrag des Klebstoffs ermöglicht, so dass auch feine Folienstrukturen randscharf übertragen werden können. In der Regel entspricht die Auflösung des Druckkopfes dabei der erzielten Auflösung der Klebstofftropfen auf der Übertragungslage in dpi (dots per inch, Punkte pro Zoll).

Es ist ferner bevorzugt, wenn zum Aufbringen des Klebstoffs ein Tintenstrahldruckkopf mit einem Düsenabstand von 30 µm bis 80 µm verwendet wird.

Durch den geringen Düsenabstand - insbesondere quer zur Druckrichtungwird sichergestellt, dass die übertragenen Klebstofftropfen auf der Übertragungslage hinreichend nahe beieinander liegen bzw. ggf. auch überlappen, so dass über die gesamte bedruckte Fläche eine gute Haftung erzielt wird.

Es ist ferner bevorzugt, wenn der Klebstoff mit einem Flächengewicht von 1,6 g/m² bis 7,8 g/m² und/oder einer Schichtdicke von 1,6 µm bis 7,8 µm aufgebracht wird. Innerhalb dieses Bereichs, der eine gute Haftung garantiert, kann die Auftragsmenge bzw. Schichtdicke des Klebstoffs in Abhängigkeit von dem verwendeten Substrat, insbesondere von dessen Saugfähigkeit, variiert werden, um das Applikationsergebnis weiter zu optimieren.

Dabei ist es zweckmäßig, wenn durch den Tintenstrahldruckkopf Klebstofftropfen mit einer Frequenz von 6 kHz bis 110 kHz bereitgestellt werden. Bei üblichen Fördergeschwindigkeiten der zu bedruckenden Folie von 10 m/min. bis 30 m/min. kann so in Förderrichtung die gewünschte Auflösung von 300 dpi bis 1200 dpi erzielt werden.

Bevorzugt werden durch den Tintenstrahldruckkopf Klebstofftropfen mit einem Volumen von 2 pl bis 50 pl mit einer Toleranz von nicht mehr als ± 6% bereitgestellt. Damit wird bei den beschriebenen Auftragsauflösungen und Auftragsgeschwindigkeiten die notwendige Klebstoffmenge gleichmäßig aufgebracht.

Dabei ist es bevorzugt, wenn durch den Tintenstrahldruckkopf Klebstofftropfen mit einer Fluggeschwindigkeit von 5 m/s bis 10 m/s mit einer Toleranz von nicht mehr als ± 15% bereitgestellt werden. Hierdurch wird die Ablenkung der Klebstofftropfen insbesondere durch Zugluft während des Transfers vom Druckkopf minimiert, so dass die Klebstofftropfen in der gewünschten definierten Anordnung landen.

Weiter ist es zweckmäßig, wenn der Klebstoff mit einer Auftragstemperatur von 40°C bis 45°C und/oder einer Viskosität von 5 mPas bis 20 mPas, bevorzugt von 7 mPas bis 15 mPas aufgetragen wird. Die Temperaturkontrolle des Druckkopfes stellt dabei sicher, dass der Klebstoff die gewünschte Viskosität besitzt. Von der Viskosität hängt wiederum die Pixelgröße und Pixelform des auf die Übertragungslage aufgebrachten Klebstoffs ab, wobei bei den angegebenen Werten eine optimale Verdruckbarkeit des Klebstoffs gewährleistet ist.

Sobald der Klebstoff den Druckkopf verlässt und in Kontakt mit Umgebungsluft bzw. der Übertragungslage kommt, kommt es dabei zu einer Abkühlung, durch die die Viskosität des Klebstoffs erhöht wird. Dies wirkt einem Verlaufen oder Spreiten der übertragenen Klebstofftropfen entgegen.

Es ist weiter vorteilhaft, wenn ein Abstand zwischen Tintenstrahldruckkopf und Substrat beim Aufbringen des Klebstoffs 1 mm nicht überschreitet.

Auch hierdurch wird die Beeinflussung des Klebstoffs durch Zugluft reduziert.

Vorzugsweise beträgt dabei eine Relativgeschwindigkeit zwischen Tintenstrahldruckkopf und Übertragungslage bzw. Substrat beim Aufbringen des Klebstoffs etwa 10 m/min bis 100 m/min, insbesondere etwa 10 m/min bis 75 m/min.

Bei diesen Geschwindigkeiten wird insbesondere in Kombination mit den oben angegebenen Parametern die gewünschte Auflösung des auf die Übertragungslage gedruckten Klebstoffs erzielt.

Bevorzugt wird hierbei ein Klebstoff der folgenden Zusammensetzung verwendet (Prozentangaben bedeuten Volumen-Prozent):

| | |
|---|---|
| 2-Phenoxyethylacrylat | 10% bis 60%, bevorzugt 25% bis 50%; |
| 4-(1-Oxo-2-propenyl)-Morpholin | 5% bis 40%, bevorzugt 10% bis 25%; |
| Exo-1,7,7-trimethylbicyclo[2.2.1]-hept-2-ylacrylat | 10% bis 40 %, bevorzugt 20% bis 25%; |
| 2,4,6-Trimethylbenzoyldiphenyl-phosphinoxid | 5% bis 35%, bevorzugt 10% bis 25%; |
| Dipropylenglykoldiacrylat | 1% bis 20%, bevorzugt 3% bis 10%; |
| Urethanacrylatoligomer | 1% bis 20%, bevorzugt 1% bis 10%; |
| Rußpigment | 0,01%-10%, bevorzugt 0,1 bis 0,5% |

Eine solche Formulierung garantiert die erwünschten Eigenschaften, insbesondere die rasche Aushärtung und eine Viskosität, welche eine gute Verdruckbarkeit bei gleichzeitig stabilem und scharfem Auftrag ermöglicht.

Dabei ist es zweckmäßig, wenn ein Klebstoff mit einer Dichte von 1 g/ml bis 1,5 g/ml, bevorzugt von 1,0 g/ml bis 1,1 g/ml verwendet wird.

Bevorzugt erfolgt das Vorhärten des Klebstoffs 0,02 s bis 0,025 s nach dem Aufbringen des Klebstoffs. Hierdurch wird der Klebstoff sehr schnell nach dem Druck durch die Vorhärtung auf der Übertragungslage bzw. dem Substrat fixiert, so dass ein Verlaufen oder Spreiten der Klebstofftropfen weitgehend vermieden wird und die hohe Druckauflösung möglichst gut erhalten bleibt.

Es ist dabei zweckmäßig, wenn das Vorhärten des Klebstoffs mit UV-Licht erfolgt, dessen Energie zu mindestens 90% im Wellenlängenbereich zwischen 380 nm und 420 nm abgestrahlt wird. Bei diesen Wellenlängen wird insbesondere bei den oben geschilderten Klebstoffformulierungen die radikalische Aushärtung zuverlässig in Gang gesetzt.

Es ist weiter vorteilhaft, wenn das Vorhärten des Klebstoffs mit einer Brutto-Bestrahlungsstärke von 2 W/cm² bis 5 W/cm² und/oder insbesondere einer Netto-Bestrahlungsstärke von 0,7 W/cm² bis 2 W/cm² und/oder einem Energieeintrag in den Klebstoff von 8 mJ/cm² bis 112 mJ/cm² erfolgt. Hierdurch wird erreicht, dass der Klebstoff die gewünschte Viskositätserhöhung durchmacht, dabei allerdings nicht vollständig ausgehärtet wird, so dass beim Applizieren der Übertragungslage auf das Substrat die notwendige Haftwirkung des Klebstoffs erhalten bleibt.

Bevorzugt erfolgt dabei das Vorhärten des Klebstoffs mit einer Belichtungszeit von 0,02 s bis 0,056 s. Bei den erwähnten Transportgeschwindigkeiten des Substrats und den angegebenen Bestrahlungsstärken wird so der notwendige Energieeintrag für die Vorhärtung sichergestellt.

Dabei ist es zweckmäßig, wenn sich beim Vorhärten des Klebstoffs dessen Viskosität auf 50 mPas bis 200 mPas erhöht. Durch eine solche Viskositätserhöhung wird garantiert, dass die Klebstofftropfen beim Applizieren der Übertragungslage auf das Substrat nicht verquetscht werden, so dass die Übertragungslage im Wesentlichen mit der beim Drucken des Klebstoffs erzielten Auflösung auf das Substrat übertragen werden kann.

Das Aufbringen des zumindest einen Teilbereichs der Übertragungslage auf das Substrat erfolgt dabei bevorzugt zwischen einer Presswalze und einer Gegendruckwalze. Hierdurch wird eine über die ganze Breite des Substrats konstante Linienpressung und damit eine gleichmäßige und hochqualitative Applikation der Übertragungslage erreicht.

Es ist dabei zweckmäßig, wenn das Aufbringen des zumindest einen mit Klebstoff versehenen Teilbereichs der Übertragungslage auf das Substrat mit einem Anpressdruck von 10 N bis 80 N erfolgt. Innerhalb dieses Bereichs kann der Anpressdruck variiert werden, um das Verfahren an die Substratbeschaffenheit anzupassen und Beschädigungen oder Verformungen des Substrats zu verhindern.

Die Applikation der Übertragungslage kann auf verschiedene Substrate erfolgen. Beispielsweise kann die Übertragungslage auf Papiersubstrate mit gestrichener und ungestrichener Oberfläche, Naturpapiere, Kunststoffe (PE, PP, PET) und Etikettenmaterialien sowie auch auf Glas oder Keramik appliziert werden. Bei Substraten aus Kunststoff, Glas oder Keramik kann eine Vorbehandlung sinnvoll sein, um die Haftung des Klebstoffs auf dem Substrat 3 zu verbessern, beispielsweise durch Coronabehandlung, Plasmabehandlung oder Beflammen). Das Applikationsergebnis ist dabei bei glatteren Substratoberflächen besser.

In einer vorteilhaften Ausführungsform ist es möglich, die Folienapplikation auf ein Substrat, welches als dreidimensionaler, insbesondere als zylindrischer, ovaler, rechteckiger, flacher Gegenstand vorliegt, zu ermöglichen, insbesondere an Rundtaktmaschinen oder Lineartaktmaschinen, bei denen die Folienapplikation nur einen Teil der am Substrat vorgenommenen Arbeitsschritte ausmacht. In solchen Maschinen erfolgen beispielsweise vor und/oder nach der Folienapplikation noch Bedruckungen und/oder Beschichtungen unterschiedlichster Art und Weise. Insbesondere bei der Folienapplikation wird das Substrat entweder um eine Rotationsachse drehbar oder fest fixiert von einer Halteeinrichtung gehalten und anschließend die Übertragungslage der Folie von einer Andrückeinrichtung auf das Substrat gedrückt und gleichzeitig der Klebstoff gehärtet.

Dabei ist es bevorzugt, wenn die Andrückeinrichtung zumindest in Teilbereichen für UV-Strahlung transparent. Dies ermöglicht, dass die Andrückeinrichtung zwischen einer UV-Strahlungsquelle, die die UV-Strahlung erzeugt, und der Halteeinrichtung angeordnet sein kann. Die Bereiche, in denen die Andrückschicht transparent ist, können sich dabei an den Bereichen, an denen die Halteeinrichtung transparent ist, orientieren. Es kann aber auch die Andrückschicht vollkommen transparent sein, während die Halteeinrichtung nur stellenweise transparent ist.

Bevorzugt ist die Andrückeinrichtung und/oder die Andrückschicht im Wellenlängenbereich von 250 nm bis 420 nm, bevorzugt im Bereich von 380 nm bis 420 nm, besonders bevorzugt 380 nm bis 400 nm, für UV-Strahlung transparent oder transluzent. Die Transparenz oder Transluzenz soll dabei insbesondere 30% bis 100% betragen, bevorzugt 40% bis 100%. Die Transparenz oder Transluzenz ist dabei von der Dicke der Andrückschicht abhängig. Eine niedrigere Transparenz oder Transluzenz kann durch höhere UV-Intensität ausgeglichen werden.

Beispielsweise kann die UV-Strahlungsquelle innerhalb eines Zylinders der Andrückeinrichtung angeordnet sein. Hierzu ist der Zylinder zumindest stellenweise als Hohlzylinder ausgeführt. Das Material des Zylinders ist dabei so gewählt, dass die Wellenlängen der UV-Strahlung, die für das Härten des Klebstoffs benötigt werden, durch den Zylinder transmittiert werden können. Der Zylinder kann vollständig für das UV-Strahlung transparent sein; es können aber auch im Zylinder transparente Fenster vorgesehen sein, sodass nur dann UV-Strahlung aus dem Zylinder austritt, wenn gerade das UV-Strahlung zum Härten des Klebstoffs benötigt wird.

Insbesondere kann der Bereich des Substrats, der mit UV-Strahlung belichtet werden soll, eingestellt werden, damit die Härtung des UV-Klebers beim Andrücken der Transferfolie auf den Klebstoff so weit fortgeschritten ist, dass die Übertragungslage der Folie am Substrat haftet und von der Trägerfolie gelöst werden kann. Je nach verwendetem Klebstoff und nach Intensität der UV-Strahlung kann es hierzu erforderlich sein, den Klebstoff am Substrat schon vor der Berührlinie zwischen Substrat und Folie zu belichten. Die Einstellung des zu belichtenden Bereichs kann beispielsweise durch (ggf. einstellbare oder wechselbare) Blenden zwischen UV-Strahlungsquelle und Substrat erfolgen. Eine oder mehrere Blenden können auch direkt an der Andrückeinrichtung angebracht sein. Die Einstellung kann auch durch Einstellen der Divergenz der von der UV-Strahlungsquelle emittierten UV-Strahlung erfolgen.

In einer weiteren bevorzugten Ausführungsform des Verfahrens weist die Andrückvorrichtung ferner eine flexible Andrückschicht auf der Halteeinrichtung auf. Hierdurch können Unregelmäßigkeiten des dreidimensionalen Substrats, der Folie und/oder des maschinellen Aufbaus ausgeglichen werden. Die flexible Andrückschicht kann beispielsweise aus Silikon bestehen.

Bevorzugt ist die Andrückeinrichtung und/oder die Andrückschicht aus Silikon und hat in dem mit UV-Strahlung zu durchstrahlenden Bereich eine Dicke im Bereich von 1 mm bis 20 mm, bevorzugt von 3 mm bis 10 mm. Das Silikon hat bevorzugt eine Härte von 20° Shore A bis 70° Shore A, bevorzugt 20° Shore A bis 50° Shore A. Das Silikon kann ein Heiß-Vulkanisat oder Kalt-Vulkanisat sein, bevorzugt ein Heiß-Vulkanisat sein.

Es ist ebenso möglich, die Andrückeinrichtung und/oder die Andrückschicht aus mehreren Silikon-Schichten aufzubauen. Dabei können die einzelnen Silikonschichten jeweils unterschiedliche Härten aufweisen. Beispielsweise kann eine erste, innenliegende Schicht eine Härte von 10° Shore A bis 50° Shore A, bevorzugt 15° Shore A bis 35° Shore A aufweisen und eine außenliegende Schicht eine Härte von 20° Shore A bis 70° Shore A, bevorzugt von 20° Shore A bis 50° Shore A aufweisen.

Die Andrückeinrichtung kann mit der Andrückschicht insbesondere kraftschlüssig und/oder formschlüssig verbunden sein. Dadurch kann eine besonders haltbare Verbindung erreicht werden.

Die Form der Andrückschicht kann flach oder dreidimensional geformt (dreidimensional gewölbte oder gebogene Kontur mit einer glatten oder strukturierten/texturierten Oberfläche) sein. Flache Andrückschichten eignen sich besonders zur Applikation der Folie auf zylindrischen Geometrien und dreidimensional geformte Andrückschichten eignen sich besonders für unrunde, ovale und eckige Geometrien. Eine strukturierte und/oder texturierte Oberfläche der Andrückschicht kann auch dazu vorteilhaft sein, um diese Struktur und/oder Textur beim Transferieren der Übertragungslage der Folie überlagernd mit auf die Oberfläche des Substrats zu übertragen. Die Struktur und/oder Textur kann dabei ein Endlosmuster oder Endlosmotiv sein oder auch ein einzelnes Muster und/oder Motiv oder eine Kombination daraus.

Es hat sich insbesondere in Versuchsreihen ergeben, dass die Oberfläche einer Silikon-Oberfläche der Andrückschicht für die zu verarbeitetende Folie adhäsiv sein kann. Dabei liegt die Oberflächenrauigkeit (Mittenrauwert) einer solchen adhäsiven Oberfläche erfahrungsgemäß unterhalb von ca. 0,5 µm, insbesondere zwischen 0,06 µm und 0,5 µm, bevorzugt zwischen etwa 0, 1 µm und 0,5 µm. Bei einer solchen adhäsiven Oberfläche ist es vorteilhaft, wenn eine Zwischenschicht insbesondere aus PET, zwischen Andrückschicht und Folie vorgesehen ist. Die Zwischenschicht verringert die Adhäsivität der Andrückschicht und erleichtert die Verarbeitung der Folie erheblich, weil die Folie nicht mehr störend an der Oberfläche der Andrückschicht haften bleibt. Die Dicke der Zwischenschicht erhöht die effektive Härte des

Ausgleichseffektes des Silikonstempels. Nachfolgend einige beispielhafte Ausführungsformen:
5 mm dicke Andrückschicht aus Silikon (49° Shore A) mit 15 µm dicker Zwischenschicht (PET-Folie) ergibt 73° Shore A (entspricht 49 % Erhöhung).
5 mm dicke Andrückschicht aus Silikon (49° Shore A) mit 50 µm dicker Zwischenschicht (PET-Folie) ergibt 85° Shore A (entspricht 70 % Erhöhung).
10 mm dicke Andrückschicht aus Silikon (47° Shore A) mit 15 µm dicker Zwischenschicht (PET-Folie) ergibt 71° Shore A (entspricht 51 % Erhöhung).
10 mm dicke Andrückschicht aus Silikon (47° Shore A) mit 50 µm dicker Zwischenschicht (PET-Folie) ergibt 78° Shore A (entspricht 59 % Erhöhung).

Bei diesen Angaben ist zu beachten, dass seitens der Definition der Messvoraussetzungen für das Shore A-Messverfahren die Messung des Sandwiches aus Andrückschicht und Zwischenschicht eigentlich nicht mehr zulässig ist. Das Shore-A-Messverfahren misst eine Eindringtiefe eines Prüfkörpers zwischen 0 mm und 2,5 mm und schreibt eine Mindestdicke des Prüflings von 6 mm vor. Durch die Zwischenschicht in Verbindung mit dem Shore-A-Messverfahren wird somit eine größere Härte vorgetäuscht, als tatsächlich vorhanden ist. Ein Rückschluss vom Messwert auf die tatsächliche / effektive Härte ist nicht möglich. Es lässt sich lediglich sagen, dass die effektive Härte des Sandwiches größer als die Härte des Silikonstempels ist und die Folie die Gesamthärte des Sandwiches dominiert und definiert, unabhängig von der Dicke der Silikonschicht.

Bevorzugt ist die Andrückschicht mit einer nicht adhäsiven Oberfläche versehen, sodass der Einsatz einer Zwischenschicht entfallen kann. In diesem Fall verhält sich die Gesamtanordnung weicher, sodass in Folge eine kleinere Anpresskraft zur Anpressung des Substrats an die Andrückschicht ausreichend ist. Dabei liegt die Oberflächenrauigkeit (Mittenrauwert) einer solchen nicht adhäsiven Oberfläche erfahrungsgemäß oberhalb von ca. 0,5 µm, insbesondere zwischen 0,5 µm und 5 µm, bevorzugt zwischen etwa 0,6 µm und 4 µm, weiter bevorzugt zwischen etwa 0,8 µm und 3 µm.

Die Andrückeinrichtung bzw. die Andrückschicht sorgt für das sichere und gleichmäßige Abrollen des dreidimensionalen Substrats unter definierten Bedingungen und gleicht hierbei Form- und Bewegungstoleranzen desselben aus. Die Andrückeinrichtung bzw. die Andrückschicht weist beispielsweise bei Substrat aus Kunststoff nur eine leichte Anpresskraft auf, da diese ansonsten deformiert werden, bei Substrat aus härteren bzw. widerstandsfähigeren Materialien wie beispielsweise Glas, Porzellan oder Keramik sind in Folge höherer Formtoleranzen und/oder höherer mechanischer Stabilität des Substrats auch etwas höhere Anpresskräfte vorteilhaft. Die Anpresskraft liegt etwa bei 1 N bis 1000 N. Beispielsweise kann die Anpresskraft bei Substrat aus Kunststoff bei etwa 50 N bis 200 N liegen und bei Substrat aus Glas, Porzellan oder Keramik bei etwa 75 N bis 300 N. Um Deformationen von Kunststoffteilen zusätzlich zu verhindern, kann beispielsweise das zu dekorierende dreidimensionale Substrat während des Prägevorgangs in einer entsprechend ausgestalteten Halteeinrichtung mit Druckluft befüllt werden.

Vorteilhafterweise erfolgt das Aufbringen des zumindest einen mit Klebstoff versehenen Teilbereichs der Übertragungslage auf das Substrat 0,2 s bis 1,7 s nach dem Vorhärten des Klebstoffs. In diesem Zeitraum kann die Vorhärtereaktion voranschreiten, ohne dass eine übermäßige Härtung des Klebstoffs erfolgt, welche die Haftung beeinträchtigen könnte.

Es ist weiter bevorzugt, wenn das Substrat vor dem Aufbringen des zumindest einen mit Klebstoff versehenen Teilbereichs der Übertragungslage vorbehandelt wird, insbesondere durch eine Koronabehandlung, eine Plasmabehandlung, durch Beflammen oder durch eine Beschichtung mit einer Lackschicht, insbesondere einer Farblackschicht und/oder einer Primerschicht. Hierdurch kann auch bei für sich genommen schlecht haftfähigen Substraten die Klebstoffhaftung verbessert werden, so dass auch bei solchen Substraten eine zuverlässige und randscharfe Applikation der Übertragungslage möglich wird.

Das Aushärten des Klebstoffs 0,2 s bis 1,7 s erfolgt dabei bevorzugt nach dem Aufbringen der Übertragungslage auf das Substrat. Bei den üblichen Transportgeschwindigkeiten von Substrat und Folie wird so ein hinreichender räumlicher Abstand zwischen der Walzenanordnung und der Aushärtestation sichergestellt.

Es ist dabei zweckmäßig, wenn das Aushärten des Klebstoffs mit UV-Licht erfolgt, dessen Energie zu mindestens 90% im Wellenlängenbereich zwischen 380 nm und 420 nm abgestrahlt wird. Bei diesen Wellenlängen wird insbesondere bei den oben geschilderten Klebstoffformulierungen die radikalische Aushärtung zuverlässig in Gang gesetzt.

Ferner ist es bevorzugt, wenn das Aushärten des Klebstoffs mit einer Brutto-Bestrahlungsstärke von 12 W/cm² bis 20 W/cm² und/oder insbesondere einer Netto-Bestrahlungsstärke von 4,8 W/cm² bis 8 W/cm² und/oder einem Energieeintrag in den Klebstoff von 200 mJ/cm² bis 900 mJ/cm², bevorzugt von 200 mJ/cm² bis 400 mJ/cm²erfolgt. Bei einem derartigen Energieeintrag wird eine zuverlässige Durchhärtung des Klebstoffs erreicht, so dass nach dem Aushärteschritt die Trägerlage der Folie abgezogen werden kann, ohne dass die applizierte Übertragungslage beschädigt wird.

Ferner ist es vorteilhaft, wenn das Aushärten des Klebstoffs mit einer Belichtungszeit von 0,04 s bis 0,112 s erfolgt. Bei den angegebenen Brutto-Bestrahlungsstärken und den üblichen Transportgeschwindigkeiten wird so der notwendige Nettoenergieeintrag für die Durchhärtung des Klebstoffs sichergestellt.

Es ist ferner bevorzugt, wenn das Ablösen der Trägerlage 0,2 s bis 1,7 s nach dem Aushärten des Klebstoffs erfolgt. Bei den üblichen Transportgeschwindigkeiten von Substrat und Folie wird so ein hinreichender räumlicher Abstand zwischen der Aushärtestation und der Ablösestation sichergestellt.

Alternativ oder zusätzlich zur Verwendung des beschriebenen UV-härtbaren Klebstoffs kann das Aufbringen eines thermoplastischen Toners als Haftvermittler auf zumindest einen Teilbereich des Substrats und/oder der Übertragungslage vorgesehen sein. Zur Applikation der Folie wird nach dem Aufbringen der Folie auf das Substrat Druck und Wärme auf die Folie und/oder das Substrat so in diesen Schichtverbund eingebracht, dass der thermoplastische Toner aufschmilzt und die Übertragungslage der Folie mit dem Substrat verbindet.

Diese Verbindung erfolgt ähnlich wie die Applikation mittels UV-härtbarem Klebstoff ebenfalls bevorzugt in einer Walzenanordnung aus zumindest zweier zusammenwirkender Walzen, die einen Pressspalt bilden. Bevorzugt besteht die Walzenanordnung aus zumindest einer Presswalze und zumindest einer Gegendruckwalze. Die Folie und das Substrat werden durch den Pressspalt geführt. Dabei kann zumindest eine der Walzen direkt oder indirekt beheizt sein, um die entsprechende Wärme bereitzustellen. Der Anpressdruck im Pressspalt kann den erforderlichen Pressdruck bereitstellen.

Nach Verlassen der Folie und des Substrats des Pressspalts kühlt der Schichtverbund ab und der Toner erhärtet wieder. Nun kann die Trägerlage der Folie von der auf das Substrat zumindest in dem Teilbereich übertragenen Übertragungslage der Folie abgezogen werden.

Die Walzenanordnung zur Applikation der Folie mit UV-härtbarem Klebstoff auf das Substrat und die Walzenanordnung zur Applikation der Folie mit thermoplastischem Toner kann identisch oder auch unterschiedlich sein.

Für die Implementierung des zumindest einen ersten, zweiten, dritten Sensors bestehen mehrere Möglichkeiten, die auch kombiniert werden können.

Besonders bevorzugt ist die Verwendung von optischen Systemen. Darunter werden alle Arten von Kamerasystemen mit oder ohne eigener Auswerteeinheit verstanden. Die erzeugten Signale können dann mittels entsprechender Software verarbeitet und somit als Führungskriterium verwendet werden. Es ist auch denkbar, aus den optischen Systemen gleich einen Steuerimpuls ausgeben zu lassen, der nicht explizit verarbeitet werden muss, aber auch kann.

Ferner können verschieden Sensor-Systeme Anwendung finden, insbesondere Auflichtsensoren, Farbsensoren, Reflexlichttaster, Lichtschranken (zur Erkennung von Bogenkanten), Ultraschallsensoren (zur Erkennung von Bogenkanten), Lasersensoren, Durchlichtsensoren (zur Erkennung von Wasserzeichen und dgl.) und/oder Sensoren in Lichtleitertechnik.

Solche Sensoren benötigen einen externen Signalverstärker, sind aber auch mit intern integrierten Signalverstärkern verfügbar. Dabei ist es für die Signalverarbeitung beliebig, ob es sich um einen analogen oder digitalen Sensor, Verstärker oder ein entsprechendes Ausgangssignal handelt.

Die Signale aus den Sensoren bzw. Verstärkern können dann mittels entsprechender Software verarbeitet werden und somit als Führungskriterium verwendet werden. Es ist auch denkbar, diese Signale aus den Sensoren bzw. Verstärkern direkt als Steuerimpuls zu verwenden. Damit wird eine externe Software bzw. Vorrichtung zur Signalverarbeitung nicht explizit benötigt.

Weiterhin ist es zweckmäßig, wenn die erste UV-Lichtquelle eine LED-Lichtquelle ist. Mit LED-Lichtquellen kann nahezu monochromatisches Licht bereitgestellt werden, so dass sichergestellt ist, dass im zum Härten des Klebstoffs notwendigen Wellenlängenbereich die geforderte Strahlungsintensität zur Verfügung steht. Dies kann mit konventionellen Quecksilber-Mitteldruckdampflampen in der Regel nicht erreicht werden.

Weiter ist es bevorzugt, wenn die erste UV-Lichtquelle in Förderrichtung der Folie bzw. des Substrats eine Fensterbreite von 10 mm bis 30 mm aufweist. Hierdurch wird eine flächige Bestrahlung des aufgetragenen Klebstoffs ermöglicht.

Zweckmäßigerweise ist die erste UV-Lichtquelle in Förderrichtung der Folie bzw. des Substrats 1 cm bis 4 cm stromabwärts des Tintenstrahldruckkopfes angeordnet. Bei den üblichen Transportgeschwindigkeiten der Folie kann so die oben erwähnte Zeit zwischen Klebstoffauftrag und Vorhärtung eingehalten werden.

Es ist weiter vorteilhaft, wenn die Walzenanordnung eine Presswalze und ein mechanisches Gegenlager, insbesondere eine Gegendruckwalze oder auch ein flaches oder leicht konkav gewölbtes Gegenlager umfasst.

Insbesondere weist die Presswalze und/oder die Gegendruckwalze dabei einen Durchmesser von 1 cm bis 3 cm auf.

Weiter ist es bevorzugt, wenn die Presswalze aus einem Kunststoff oder Gummi mit einer Härte von 70 Shore-A bis 90 Shore-A ausgebildet ist.

Die Gegendruckwalze oder das Gegenlager ist vorzugsweise aus einem Material ausgebildet, das einen Härtegrad im Bereich von 60° Shore A bis 95° Shore A, vorzugsweise im Bereich von 80° Shore A bis 95° Shore A und/oder einen Härtegrad im Bereich von 450 HV 10 (HV = Vickershärte) bis 520 HV 10, vorzugsweise im Bereich von 465 HV 10 bis 500 HV 10 aufweist. Beispielsweise ist dieses Material Kunststoff oder Silikon oder aber ein Metall wie Aluminium oder Stahl.

Die Materialparameter und die spezifische Geometrie der Walzenanordnung können dabei im Rahmen der angegebenen Bereiche in Abhängigkeit von den Eigenschaften des zu verarbeitenden Substrats und der zu verarbeitenden Folie angepasst werden, um einerseits eine optimale Haftung zwischen Übertragungslage und Substrat zu gewährleisten und andererseits ein Verquetschen des Klebstoffs und/oder eine Beschädigung der Übertragungslage oder des Substrats zu vermeiden.

Bevorzugt ist dabei die Walzenanordnung in einem Abstand von 10 cm bis 30 cm von der ersten UV-Lichtquelle angeordnet ist.

Bei den üblichen Transportgeschwindigkeiten von Folie und Substrat wird so die bereits oben erläuterte Vortrocknungszeit zwischen Belichtung des Klebstoffs und Applikation der Folie sichergestellt.

Ferner ist es bevorzugt, wenn die zweite UV-Lichtquelle eine LED-Lichtquelle ist. Mit LED-Lichtquellen kann nahezu monochromatisches Licht bereitgestellt werden, so dass sichergestellt ist, dass im zum Härten des Klebstoffs notwendigen Wellenlängenbereich die geforderte Strahlungsintensität zur Verfügung steht. Dies kann mit konventionellen Quecksilber-Mitteldruckdampflampen in der Regel nicht oder nur unter deutlich größerer Energieaufwendung erreicht werden.

Vorteilhafterweise weist dabei die zweite UV-Lichtquelle in Förderrichtung der Folie bzw. des Substrats eine Fensterbreite von 20 mm bis 40 mm auf. Hierdurch wird eine flächige Bestrahlung des Klebstoffs sichergestellt.

Bevorzugt ist die zweite UV-Lichtquelle in Förderrichtung der Folie 10 cm bis 30 cm stromabwärts der Walzenanordnung angeordnet. Auf diese Weise wird ein hinreichender räumlicher Abstand zwischen der Walzenanordnung und der Aushärtestation sichergestellt.

Durchmesser von 0,5 cm bis 2 cm aufweist, über welche die Trägerlage abziehbar ist.

Bevorzugt ist die Abzieheinheit in Förderrichtung der Folie 10 cm bis 30 cm stromabwärts der zweiten UV-Lichtquelle angeordnet.

Bei den üblichen Transportgeschwindigkeiten von Folie und Substrat wird so die bereits oben erläuterte Trocknungszeit zwischen Applikation der Folie und Ablösung der Trägerlage sichergestellt, so dass die Trägerlage beschädigungsfrei gelöst werden kann.

Die Erfindung wird nun anhand von Ausführungsbeispielen näher erläutert. Es zeigen
- Fig. 1: Eine schematische Darstellung einer zur Durchführung des erfindungsgemäßen Verfahrens geeigneten Applikationsvorrichtung zum Applizieren einer Folie auf ein Substrat zur Veranschaulichung der Erkennung der Relativlage von Folie und Substrat;
- Fig. 2: Eine schematische Darstellung einer zur Durchführung des erfindungsgemäßen Verfahrens geeigneten Applikationsvorrichtung zum Applizieren einer Folie auf ein Substrat mit Sensoren zur Erkennung der Relativlage von Folie, Substrat und einem Tintenstrahldruckkopf zum Klebstoffauftrag;
- Fig. 3: Ein schematisches Regelkreisschema zur Ansteuerung einer Applikationsvorrichtung nach Fig. 2

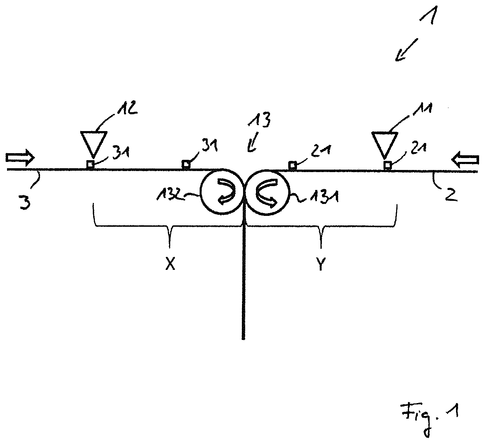

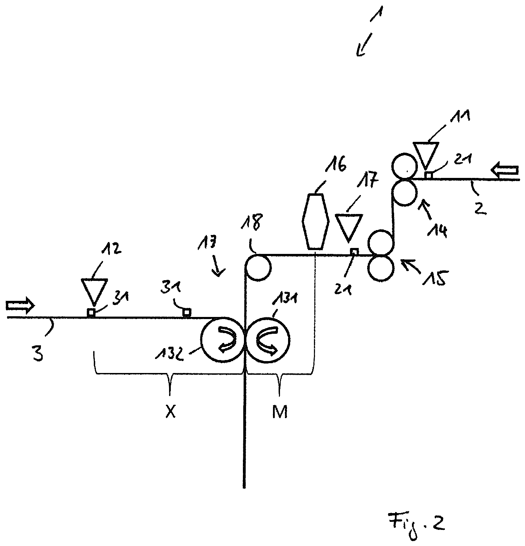

Fig. 1 zeigt eine schematische Darstellung einer Vorrichtung 1 zum Applizieren einer Folie 2 mit einer Trägerlage und einer Übertragungslage auf ein Substrat 3. In der Darstellung ist lediglich die Sensorik zur Steuerung von Folien- bzw. Substratvorschub gezeigt. Zusätzliche Komponenten der Vorrichtung 1 sind schematisch in Fig. 2 veranschaulicht.

Sowohl auf der Folie 2, als auch auf dem Substrat 3 sind Passermarken 21, 31 vorgesehen, welche mit jeweiligen Sensoren 11, 12 der Vorrichtung 1 erkannt werden können. In Abhängigkeit von den Sensordaten kann der Folien- bzw. Substratvorschub gesteuert werden, so dass Folie 2 und Substrat 3 in einer Walzenanordnung 13 mit einer Andruckwalze 131 und einer Gegendruckwalze 132 passergenau zusammengeführt werden.

Wie Fig. 2 veranschaulicht, wird die Folie 2 mittels zweier Zugwerke 14, 15 zunächst zu einem Tintenstrahldruckkopf 16 geführt, mittels welchem ein Klebstoff auf die Übertragungslage der Folie 2 appliziert wird. Um eine lagegenaue Applikation des Klebstoffs zu ermöglichen, wird stromaufwärts vom Tintenstrahldruckkopf 16 eine Passermarke 21 der Folie 2 mittels eines dritten Sensors 17 erfasst. Nach dem Klebstoffauftrag wird die Folie 2 über eine Umlenkrolle 18 zur Walzenanordnung 13 geführt.

Die Vorrichtung 1 kann ferner noch weitere Komponenten umfassen, die in den Figuren nicht gezeigt sind. Insbesondere sind auch für das Substrat 3 entsprechende steuerbare Zugwerke vorgesehen. Ferner können noch UV-Lampen zum Vor- bzw. Aushärten des Klebstoffs vorgesehen sein. Weitere Rollenanordnungen dienen dem Ablösen der Trägerlage mit verbliebenen, nicht übertragenen Bereichen der Übertragungslage vom Substrat 3 und dem Aufspulen der abgelösten Trägerlage.

Für die Applikation der Übertragungslage auf das Substrat 3 gibt es mehrere Möglichkeiten. In der im Folgenden beschriebenen Minimalvariante wird von einem blanken Endlos-Substrat 3 ausgegangen, welches insbesondere auch keine Merkmale aufweist, die als Registermarke 31 dienen können. Es wird weiter davon ausgegangen, dass auch keine Registermarke auf einem mit dem Substrat 3 mitlaufenden Bauelement (Walze, Rad) zu Hilfe genommen wird. Selbstverständlich können solche Merkmale ebenfalls in die Steuerung bzw. Regelung der Vorrichtung 1 integriert werden.

Bei der Applikation der Übertragungslage wird zunächst ein UV-Kleber als motivgebende Schicht auf das Substrat 3 oder die Rückseite der Folie 2 aufgebracht. Dies erfolgt in Form der späteren Folienapplikation bzw. des späteren Motivs. Dabei kann der Klebstoff in Form des Motivs oder ggf. auch des Motivs und einer zusätzlichen separate Registermarke aufgedruckt werden.

[Anschließend wird die Folie 2 und das Substrat 3 mit dem zwischen Folie 2 und Substrat 3 angeordneten UV-Kleber zusammengeführt. In der Walzenanordnung 13 erfolgt ein Andrücken der Folie 2 an das Substrat 3.

Nach dem Applizieren der Folie 2 auf das Substrat 3 erfolgt ein UV-Härten des UV-Klebers mit der aufgebrachten Folie 2. Nach der Aushärtung wird die Trägerlage der Folie 2 zusammen mit nicht transferierten Bereichen der Übertragungslage vom Substrat 3 abgezogen und aufgewickelt. Optional kann noch ein Umspulen der Folie 2 zum Richtungswechsel der aufgewickelten Folienbahn erfolgen. An dieser Stelle ist der erste Prägedurchgang beendet.

Wenn das Substrat 3 keine Registermarken 31 enthält, ist es kaum möglich, die Prägungen des ersten Durchgangs im Register (korrekter Relativabstand) mit den Prägungen eines zweiten Durchgangs zu bringen. Damit ist ein entsprechender Verlust von an sich nutzbarer Übertragungslage zwischen beiden Durchgängen verbunden. Mit zusätzlichen Registermarken 31 auf dem Substrat 3 kann dieses Problem vermieden werden.

Zu Beginn des zweiten Prägevorgangs erfolgt ein Rollenwechsel, d.h. die aufgewickelte Trägerlage mit den verbliebenen Bereichen der Übertragungslage wird an der Abwickelseite angebracht.

Zunächst müssen nun die bereits ausgeprägten Bereiche der Folie 2, also die Bereiche, in denen die Übertragungslage bereits auf das Substrat 3 übertragen wurde, detektiert werden.

Beim Start des zweiten Durchgangs kann diese Detektion ggf. auch manuell bzw. mit Augenmaß erfolgen. Bevorzugt erfolgt dies jedoch mittels optischer Sensoren.

Ein derart erkannter Nutzbereich der Folie 2, also ein noch nicht ausgeprägter Bereich der Übertragungslage muss nun relativ zum Druckkopf 16 positioniert werden, falls auf die Rückseite der Folie 2 gedruckt wird. Andernfalls erfolgt eine Positionierung zu einem auf dem Substrat 3 aufgedruckten Kleber-Motiv.

Beim Start des zweiten Durchgangs kann diese Positionierung ebenfalls manuell bzw. mit Augenmaß erfolgen. Im laufenden Durchgang erfolgt dies mittels optischer Sensoren 11, 12, 17, deren Messwerte zum Regeln des Folienzugs über die Zugwerke 14, 15 herangezogen werden.

Bei korrekter Positionierung erfolgt nun, wie auch im ersten Prägedurchgang das Zusammenführen der Folie 2 mit dem Substrat 3 mit dem zwischen Folie 2 und Substrat 3 angeordneten UV-Kleber, das Andrücken der Folie 2 in der Walzenanordnung 13 an das Substrat 3, ein anschließendes UV-Härten des UV-Klebers mit der aufgebrachten Übertragungslage und das Abziehen und Aufwickeln der Folie 2 zusammen mit nicht transferierten Bereichen der Übertragungslage.

Falls noch ausreichend große ausprägbare Bereiche der Übertragungslage auf der Folie 2 vorhanden sind, kann anschließend noch ein weiterer Prägevorgang auf die beschriebene Art erfolgen.

Eine genauere Steuerung ist möglich, wenn auch auf dem Substrat 3 Passermarken 31 vorgesehen sind. Bei dieser Variante müssen also drei Elemente registergenau zueinander positioniert werden, nämlich das Substrat 3 mit ggf. darauf vorhandenen Motiven, beispielsweise gedruckten Dekoren, bzw. ein vorgegebener Nutzbereich des Substrats 3, der UV-Kleber als motivgebende Schicht für die zu applizierende Übertragungslage der Folie 2, sowie die Übertragungslage der Folie 2 mit gegebenenfalls darauf vorhandenen Motiven oder einem Endlosdesign.

Um zwischen diesen Elementen eine passergenaue Ausrichtung zu gewährleisten, sind Passermarken 21, 31 notwendig. Dabei kann es sich auch um beliebig gestaltete Steuermarken, Druckmarken, ausgeprägte Stellen der Folie 2, Designmerkmale von Folie 2 oder Substrat 3, Bogenkanten von Folie 2 oder Substrat 3 oder jegliche weitere Art von Führungs- bzw. Steuerkriterien handeln.

Solche Steuerkriterien können bzw. müssen sowohl auf dem Substrat 3, der Folie 2 und/oder auch am Druckkopf 16 vorhanden sein und/oder generiert werden. Ebenso ist denkbar, dass mittels eines Steuerungssignales aus der Software für die Ansteuerung der Substrat-Zuführung und/oder der Folien-Zuführung und/oder der Druckkopf-Ansteuerung eine Passerung durchgeführt werden kann.

Weiterhin ist denkbar, dass die Passerung bzw. ein Steuerungs-Führungssignal oder Impuls mechanisch über die Anlage detektiert, aufgenommen werden kann. Beispielsweise kann auf einer Transportwalze für das Substrat 3 und/oder der Folie 2 oder an einem entsprechenden mitdrehenden Element (Rad, Walze) eine Markierung angeordnet sein, die mittels optischer Sensoren erfassbar ist. Auch so sind Längen- und/oder Zeitinformationen bezüglich der Position von Folie 2, Substrat 3 und/oder Druckkopf 16 erfassbar.

Die spezifische Gestaltung der Passermarken 21, 32 sowie ggf. von Markierungen auf mitlaufenden Teilen der Vorrichtung unterliegt keinen speziellen Regeln, sie muss lediglich an die Sensoren 11, 12, 17 angepasst sein.

Für diese Sensoren 11, 12, 17 ist die Verwendung von optischen Systemen besonders bevorzugt. Darunter werden alle Arten von Kamerasystemen mit oder ohne eigene Auswerteeinheit verstanden. Die erzeugten Signale können dann mittels entsprechender Software verarbeitet und somit als Führungskriterium verwendet werden. Es ist auch denkbar, aus den optischen Systemen gleich einen Steuerimpuls ausgeben zu lassen, der nicht explizit verarbeitet werden muss, aber auch kann.

Ferner können verschieden Sensor-Systeme Anwendung finden, insbesondere Auflichtsensoren, Farbsensoren, Reflexlichttaster, Lichtschranken (zur Erkennung von Bogenkanten), Ultraschallsensoren (zur Erkennung von Bogenkanten), Lasersensoren, Durchlichtsensoren (zur Erkennung von Wasserzeichen und dergleichen) und/oder Sensoren in Lichtleitertechnik.

Solche Sensoren 11, 12, 17 benötigen einen externen Signalverstärker, sind aber auch mit intern integrierten Signalverstärkern verfügbar. Dabei ist es für die Signalverarbeitung beliebig, ob es sich um einen analogen oder digitalen Sensor, Verstärker oder ein entsprechendes Ausgangssignal handelt.

Die Signale aus den Sensoren 11, 12, 17 bzw. Verstärkern können dann mittels entsprechender Software verarbeitet werden und somit als Führungskriterium verwendet werden. Es ist auch denkbar, diese Signale aus den Sensoren 11, 12, 17 bzw. Verstärkern direkt als Steuerimpuls zu verwenden. Damit wird eine externe Software bzw. Vorrichtung zur Signalverarbeitung nicht explizit benötigt.

Im Folgenden wird das reine Positionieren der Folie 2 zum Substrat 3 im Detail beschrieben, vorerst ohne auf den Druckkopf 17 zu achten. Hierfür ist der Sensor 12 vorgesehen, der, wie oben beschrieben, optisch, sensorisch und oder mechanisch sein kann, und im Bereich der Substratzuführung angebracht ist. Es ist zu beachten, dass der Klebstoffdruck auf das Substrat 3 oder auf die Folie 2 erfolgen kann. Die jeweils gewählte Ausführungsform hat dabei jedoch keinen wesentlichen Einfluss auf die Grundlagen der Steuerung bzw. Regelung der Vorrichtung 1.

Der Sensor 12 muss vor der Walzenanordnung 13 liegen. Es hat sich herausgestellt, dass ein Abstand zur Walzenanordnung 13 von 10 mm bis 800 mm besonders vorteilhaft ist. Eine saubere Passerung von Motiven etc. zueinander kann nur vor der permanenten Verbindung, also der Folienapplikation auf das Substrat 3 in der Walzenanordnung 13 vollzogen werden, da danach kein Einfluss mehr auf diese Passerung genommen werden kann.

Es kann jedoch auch eine Überprüfung der Passergenauigkeit nach der Walzenanordnung 13 vollzogen werden, dabei wird jedoch nicht mehr auf das soeben applizierte Motiv eingegangen, sondern auf das darauf folgende Motiv. Dabei können Abweichung beim soeben applizierten Teilbereich der Übertragungslage bestimmt werden und gegebenenfalls entsprechende Korrekturanweisungen an die Zugwerke 14, 15 generiert werden. Dieser Modus wird im Normalfall für eine Regelungsschleife verwendet.

Der Abstand des Sensors 11 oder 12 vor der Walzenanordnung 13 von 10 mm bis 800 mm setzt sich aus dem Abstand der Walzenanordnung 13 zum Zugwerk 15, dem Abstand der Walzenanordnung 13 zum Druckkopf 16, der Signalverarbeitungsdauer für den Druckkopf 16, der Bahngeschwindigkeit des Substrats 3 und der Folie 2, der Signalverarbeitung der Sensoren 11 bzw. 12 zusammen.

Als Beispiel dient im Folgenden der Anwendungsfall mit einem Druckkopf 16. Bei einer Bahngeschwindigkeit von ca. 70 m/min benötigt die Software des Druckkopfes 16 eine Vorlaufstrecke zur Walzenanordnung 13 (Platzierung des Markensensors 11 bzw. 12 vor der Walzenanordnung 13) von ca. 300 mm, um das Signal zu verarbeiten. Der Sensor 12 zum Erkennen der Substratmarke muss also mind. 300 mm vor der Walzenanordnung 13 positioniert werden.

Beachtet werden muss ferner der Abstand vom Druckkopf 16 zur Walzenanordnung 13, der konstruktiv gegeben ist. Dieser Abstand ist also ein Offsetwert, da die Folienposition, auf die der Druckkopf 16 druckt, diese Strecke zur Walzenanordnung 13 zurücklegen muss während sich das Substrat 2 gleichzeitig genauso fortbewegt. Daher muss dieser Abstand zum Abstand zwischen Substratmarken-Sensor 12 und Walzenanordnung 13 noch hinzugerechnet werden. In diesem Beispiel beträgt dieser Abstand ca. 350 mm. Somit ergibt sich eine Gesamtvorlaufstrecke vom Substrat-Sensor 12 zur Walzenanordnung 13 von 300 mm + 350 mm, also von 650 mm.

Im soeben beschriebenen Beispiel fungiert das Passersignal des Sensors 12 als Steuersignal, also als sogenannter Master und somit als Leitsignal für alle nachfolgenden Regelprozesse.

Die Folienzuführeinheit besteht aus Folienabwicklern, Zugwerken 14, 15, und Folienaufwicklern. Das Zugwerk 14, 15 kann mit Schrittmotorentechnik, Sensortechnik, etc. ausgestattet sein. Es ist denkbar, dass die Einheit aus jeweils nur einer Komponente, mehreren Komponenten, oder einer Mischung der oben genannten Komponenten besteht. Zusätzlich kann diese Einheit mit Tänzern, Folienspeichern, etc. ausgestattet sein.

Die Vorrichtung 1 kann auch mehrere Folienbahnen bzw. Folienspuren aufweisen. Dabei ist es nötig, dass jede zu passernde Folienbahn mit jeweils einem Sensor 11 ausgestattet ist.

Für eine Passerung einer Einzelbildfolie 2 muss ein bestimmtes Führungskriterium in der Folie angebracht sein. Auch hier unterliegt die Form, beispielsweise die geometrische Gestaltung, Farbe, die Gestaltung als Ausstanzung, Prägung oder Wasserzeichen, die Verwendung einer mechanische Komponente in der Maschine (mitlaufende "virtuelle Marke" auf einer Walze, oder einer Lineareinheit), etc., als Führungskriterium keinen speziellen Regeln.

Ein Endlosdekor kann ferner durch seine Ausprägung (also die erzeugte Aussparung in der Übertragungslage) nach dem ersten Prägedurchgang ausgerichtet werden, wobei die Ausprägung dann als Führungskriterium fungiert. Auch hier ist die Gestaltung der zur Führung verwendeten Ausprägung frei wählbar.

Die relative Positionierung der Folie 2 zum Substrat 3 erfolgt bevorzugt über die Foliendehnung. Dies wird im Folgenden näher erläutert.

Wie Fig. 1 zeigt, beträgt der Leseabstand zwischen Substratmarken-Sensor 12 zur Walzenanordnung 13 X mm, der Abstand vom Folienmarken-Sensor 11 zur Walzenanordnung 13 Y mm. Nachdem in diesem speziellen Fall der Kaltfolienprägung im permanenten Lauf die Folie 2 und das Substrat 3 sich im Gleichlauf befinden, muss für eine Passerung der Marken bzw. Bilder, bzw. Folie 2 zum Substrat 3 der Abstand X größer oder gleich dem Abstand Y sein. Jedoch darf der minimale Unterschied nicht allzu zu groß sein. Es hat sich heraus gestellt, dass ein minimaler Versatz von 0 mm bis 10 mm akzeptabel ist. Für die folgende Betrachtung des Passerungsvorgangs wird ein Versatz von 0 mm vorausgesetzt.

Die Folie wird erfindungsgemäß mit einer Grunddehnung von Z ‰ von 1 bis 6‰, bevorzugt 3‰, bezogen auf die Rapportlänge, also dem Abstand zwischen aufeinander folgenden Marken 21, konstant zum Substrat 3 gefördert. Die Folie 2 ist im normalen Lauf also immer leicht vorgedehnt.

Um die beiden Steuermarken 21, 31 über einander zu legen, wird der Folienmarken-Sensor 11 im Slave-Modus zum Substrat 3 mit dessen Marke 31 positioniert. Dies geschieht über eine leichte Veränderung der Foliendehnung dadurch, dass das Zugwerk 14, 15 an der Folie 2 die Folie 2 mehr oder weniger leicht bremst, woraus sich eine verminderte bzw. vergrößerte Foliendehnung Z± M ‰ ergibt. Durch diese Spannungs- bzw. Dehnungsänderung ist es möglich, die Führungskriterien zueinander zu positionieren. Aus diesem Grund ist auch der oben dargestellte minimale Unterschied zwischen X und Y realisierbar, da mittels der Foliendehnung ein gewisser Unterschied ausgleichbar ist. Weiterhin kann mit einem gewissen geringen Offset gearbeitet werden, der sich dann ebenso in der Foliendehnung widerspiegelt.

Für eine registergenaue Applikation der Übertragungslage der Folie 2 auf das Substrat 3 ist ferner noch eine exakte Positionierung des UV-Kleber-Drucks zum Substrat 3 und/oder zur Folie 2 notwendig. Für diese Verfahrensvariante können verschiedene Sensoranordnungen Anwendung finden.

In einer ersten Variante liegt nur ein Sensor 12 zum Erkennen der Substratmarke 31 vor. Dies eignet sich für Folien 2 mit Endlosdesign, die in nur einem Prägedurchlauf verarbeitet werden sollen. Der Sensor 12 für die Substratmarke 31 stellt dabei die Foliendekoration an der vorgesehenen Stelle auf dem Substrat 3 sicher.

In einer zweiten Variante sind zwei Sensoren 11, 12 vorgesehen. Dies eignet sich für Folien 2 mit Einzelbilddesign, die in nur einem Prägedurchlauf verarbeitet werden. Ein Sensor 12 für die Substratmarke 31 und ein Sensor 11 für die Folienmarke 21 sind hier ausreichend, um die Positionierung des Folieneinzelbilds zur vorgesehenen Stelle auf Substrat 3 sicherzustellen.

Die genaueste Steuerung ist in einer Vorrichtung 1 mit drei Sensoren möglich. Hiermit kann eine Folie 2 mit Einzelbilddesign in mehreren Prägedurchläufen verarbeitet werden. Sensoren 11, 12 für die Substratmarke 31 und für die Folienmarke 21 stellen die gewünschte Relativlage zwischen Folie 2 und Substrat 3 sicher. Zur Positionierung des Kleberdrucks auf Folie 2, also zur Ansteuerung des Druckkopfs 16, ist ein weiterer Sensor 17 vorgesehen. Hiermit kann sowohl die Positionierung des Folieneinzelbilds zur vorgesehenen Stelle auf dem Substrat 3, sowie die Positionierung des Kleberdrucks auf die Folie 2 genau gesteuert werden.

Ein komplettes System aus Substrat 3, Folienpositionierung und Tintenstrahldruckkopf 16 zur Durchführung des zuletzt genannten Verfahrens wird im Folgenden unter Bezugnahme auf Fig. 2 beschrieben.

Insgesamt werden also, wie beschrieben, ein Sensor 12 für das Substrat 3, ein Sensor 11 für die Passerung der Folie 2 zum Substrat 3 und ein Sensor 17 für die Passerung der Druckkopfs 16 zur Folie 2 benötigt. Ein Folienzugwerk 15 zwischen dem ersten Zugwerk 14 und dem Druckkopf 16 ermöglicht eine Passerung der Folie 2 zwischen beiden Zugwerken 14 und 15 auf das vom Sensor 12 generierte Mastersignal bezüglich des Substrates 3. Die beiden Zugwerke 14, 15 verlagern die Positionierung der Folie 2 zum Substrat 3 über die Foliendehnung im Folienverlauf stromaufwärts vor den Druckkopf 16. Am Druckkopf 16 ist die Folie 2 also bereits korrekt positioniert und muss danach nicht noch einmal verdehnt werden. Dadurch wird auch der auf der Folie 2 vorgesehene Kleberdruck in vorteilhafter Weise nicht noch mitverdehnt, so dass das Druckbild nicht verzerrt wird.

Bezüglich der Ansteuerung der Vorrichtung 1 sind die Signale der Sensoren 11, 12, 17 als getrennte Systeme zu betrachten. Als Master dient im beschriebenen Fall die von dem Sensor 12 auf dem Substrat 3 erkannte Steuermarke 31. Dieses ist das sogenannte Leitsignal. An diesem Signal orientiert sich zum einen die Ausrichtung bzw. Dehnung der Folie 2 durch die Zugwerke 14, 15 und/oder zum anderen die Positionierung des Druckkopfs 16, die durch den Sensor 17 zum erneuten Lesen der Folienmarke 21 unterstütz wird. Wie schon oben beschrieben, wird also die Folie 2 soweit positioniert, dass die Folienmarke 21 als Druckstartsignal für den Druckkopf 16 dienen kann.

Für die Funktionsweise ist es nötig, dass der Abstand von der Substratmarke 31 zur Walzenanordnung 13, im nachfolgenden X genannt, größer oder gleich dem Abstand von der Walzenanordnung 13 zum Druckkopf 16, im nachfolgenden M genannt, ist. Ideal ist ein weitestgehend gleicher Abstand, wenn jedoch X>M ist, kann über einen Offsetwert in der Steuerung (beispielsweise eine Zeitverzögerung oder über einen festgelegten Folienweg durch nicht angesteuerte Druckzeilen am Druckkopf 16) der Druckzeitpunkt entsprechend eingestellt werden. Die Verarbeitung des Startsignals kann in der Druckkopfsteuerung, oder extern geschehen.

Insgesamt stehen also bis zu drei Eingangsgrößen - also die Messdaten der Sensoren 11, 12, 17 - und drei Stellgrößen, insbesondere der Vorschub bzw. die Dehnung von Folie 2 und Substrat 3 sowie die Positionierung des Tintenstrahldruckkopfs 16 für die Steuerung bzw. Regelung der Applikationsvorrichtung 1 zur Verfügung. Hieraus resultieren mehrere Möglichkeiten zur Implementierung der Steuerungs- bzw. Regelungslogik.

Zum einen ist es möglich, dass die Zugwerke 14, 15 für die Folie 2 in Abhängigkeit von der Substratmarke 31 gesteuert oder geregelt werden.

Dabei ist es zweckmäßig, wenn die Transportvorrichtung für das Substrat 3 und/oder der Tintenstrahldruckkopf 16 in Abhängigkeit von einer Steuerinformation für die Zugwerke 14, 15 und der Folienmarke 21 gesteuert und/oder geregelt wird.

In diesem Fall dient also die das Substrat 3 betreffende Information, als Master-Eingangsgröße, in Abhängigkeit von welcher die Steuerung erfolgt. Dies kann wiederum auf verschiedene Art implementiert werden.

Zunächst ist es möglich, eine Steuerung mit dem Druckmarkensensor 31 des Substrates 3, also dem Sensor 11, zu implementieren, nach dem der Vorschub der Folie 2 sowie auch der Tintenstrahldruckkopf 16 gesteuert werden.

Alternativ kann der Druckmarkensensor 31 des Substrates 3 zur Steuerung verwendet werden und in Abhängigkeit davon eine Regelung der Folie 2 und anschließende Regelung bzw. Ansteuerung des Tintenstrahldruckkopfs 16 durch die Folienmarke 21, also die Messwerte des Sensors 11 bzw. 17 erfolgen.

Auf eine Regelung des Transports der Folie 2 kann auch verzichtet werden. Hier erfolgt lediglich ein Regeln des Druckes durch die Folienmarke 21, also den Sensor 11, oder auch durch die Druckmarke 31 des Substrates 3, also den Sensor 12.

Ferner kann eine Steuerung mit dem Druckmarkensensor 31 des Substrates 3, auch noch mit einer Regelung der Folie 2 auf Grundlage der Daten des Sensors 12 implementiert werden, wobei auf ein Regeln des Druckes verzichtet werden kann.

Alternativ kann die Transportvorrichtung für das Substrat 3 auch in Abhängigkeit vom Sensor 11, also der Folienmarke 21 gesteuert oder geregelt werden.

Dabei ist es zweckmäßig, wenn die Zugwerke 14, 15 und/oder der Tintenstrahldruckkopf 16 in Abhängigkeit von einer Steuerinformation für die Transportvorrichtung für das Substrat 3 und der Informationen der Sensoren 12, 17 gesteuert und/oder geregelt werden.

In diesem Fall dient also die die Folie 2 betreffende Information, als Master-Eingangsgröße, in Abhängigkeit von welcher die Steuerung erfolgt. Dies kann ebenfalls wiederum auf verschiedene Art implementiert werden.

Auch hier ist es möglich, eine Steuerung mit dem Druckmarkensensor 21 der Folie 2, also dem Sensor 11, zu implementieren, nach dem der Vorschub des Substrats 3 sowie auch der Tintenstrahldruckkopf 16 gesteuert werden.

Alternativ kann der Druckmarkensensor 21 der Folie 2 zur Steuerung verwendet werden und in Abhängigkeit davon eine Regelung des Substratvorschubs und anschließende Regelung bzw. Ansteuerung des Tintenstrahldruckkopfs 16 durch die Substratmarke 31, also die Messwerte des Sensors 12 erfolgen.

Auf eine Regelung des Transports des Substrats 3 kann auch verzichtet werden. Hier erfolgt lediglich ein Regeln des Druckes durch die Substratmarke 31, also den Sensor 12, oder auch durch die Passermarke 21 der Folie 2, also den Sensor 11.

Ferner kann eine Steuerung mit dem Druckmarkensensor 11 der Folie 2 auch noch mit einer Regelung des Substrats 3 auf Grundlage der Daten des Sensors 11 implementiert werden, wobei auf ein Regeln des Druckes verzichtet werden kann.

Bevorzugt ist dabei eine Regelung unter Verwendung der Substratmarke 31 als Master-Größe.

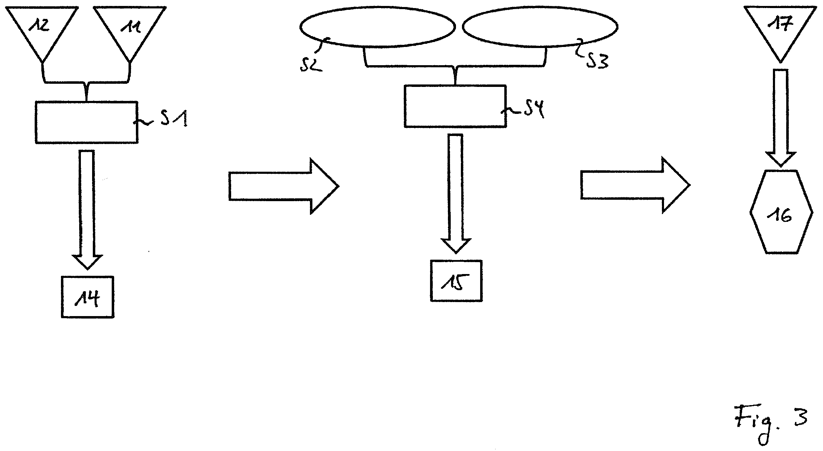

Ein beispielhafter Regelkreis hierfür ist in Fig. 3 veranschaulicht. In einem ersten Schritt S1 werden die Daten der Sensoren 11 und 12 erfasst und ein Soll-Ist-Vergleich durchgeführt. Die Daten des Sensors 12, also die Position der Substratmarke, dienen als Mastersignal. Bei Abweichungen von der relativen Sollposition zwischen Substratmarke und Folienmarke wird das Zugwerk 14 entsprechend beschleunigt oder gebremst.

Gleichzeitig wird in den Schritten S2 und S3 die Bahngeschwindigkeit von Folie 2 und Substrat 3 überwacht und in Schritt S4 ebenfalls ein Soll-Ist-Vergleich durchgeführt. Weichen die Bahngeschwindigkeiten von einander ab, insbesondere wegen einer oben beschriebenen Änderung am Zugwerk 14, so wird das Zugwerk 15 entsprechend zur Korrektur angesteuert.

In einem weiteren parallelen Prozess hierzu wird der Druckkopf 16 in Abhängigkeit der Daten des Sensors 17 und eines grundlegenden Steuerdatensatzes, der das aufzudruckende Muster vorgibt, geregelt. Insgesamt werden also alle Größen des Systems in Abhängigkeit von der mittels des Sensors 12 erfassten Position der Substratmarke 31 geregelt.

Im Folgenden werden noch die weiteren Komponenten der Vorrichtung 1 erläutert, die nicht unmittelbar mit der Passerung von Klebstoffdruck, Folie 2 und Substrat 3 in Zusammenhang stehen, die aber für die Applikation der Übertragungslage der Folie 2 auf das Substrat wesentlich sind.

Der Tintenstrahldruck erfolgt über einen Piezo-Drop-on-Demand-Druckkopf 16. Der Druckkopf 16 muss für hochqualitative Ergebnisse über eine bestimmte physikalische Auflösung, Tropfengröße und Düsenabstand verfügen. Die Düsen können dabei in einer oder mehreren Reihen angeordnet sein. Die physikalische Auflösung sollte 300 npi bis 1200 npi (= Nozzles per Inch) betragen. Ein geringer Düsenabstand quer zur Druckrichtung sorgt dafür, dass die gedruckten Pixel ebenfalls quer zur Druckrichtung nah beieinander liegen oder je nach Klebstoffmenge überlappen.

In der Regel entsprechen die npi den dpi (dots per inch) auf dem Bedruckstoff, also entweder dem Substrat 3 oder der Folie 2. Bei Einsatz der Graustufentechnik, die bestimmte Druckköpfe 16 bieten, werden Graustufen durch verschiedene Tintenmengen pro gedrucktem Pixel erzeugt. Die Graustufen werden in der Regel durch Abfeuern mehrerer nahezu gleichgroßer Tropfen auf einen gedruckten Pixel erzeugt, die sich noch in der Flugphase zum Substrat zu einem größeren Tintentropfen vereinen. Analog zu den Graustufen verhält sich die Klebstoffmenge auf dem Bedruckstoff.

Die Klebstoffmenge muss je nach Saugfähigkeit des Substrats 3 bzw. der Übertragungslage der Folie 2 variiert werden. Die Klebstoffmenge auf der Folie 2 muss 1,6 bis 7,8 g/m² betragen, um eine vollständige Folienapplikation auf jedem Substrat 3 zu gewährleisten. Die Schichtdicken des aufgetragenen Klebstoffs betragen dann 1,60 µm bis 7,80 µm. Für eine optimale Benetzung der Grundierungsschicht der Folie 2 mit Klebstoff, sollte diese Schicht eine Oberflächenspannung von 38 bis 46 mN/m aufweisen, insbesondere der Bereich von 41 bis 43 mN/m sorgt für eine optimale Farbannahme.

Der Düsenabstand sollte 30 bis 80 µm betragen. Um eine hohe Auflösung in Druckrichtung zu gewährleisten, muss der Piezo-Aktuator des Druckkopfes 16 die Klebstofftropfen mit einer Frequenz von 6 bis 110 kHz abfeuern, was für Bedruckstoffgeschwindigkeiten von 10 m/min bis 75 m/min eine Auflösung auf dem Bedruckstoff von 600 bis 1200 dpi erzeugt.

Der Druck innerhalb der Düsenkammer beträgt bevorzugt 10 mbar bis 15 mbar und sollte nicht überschritten werden, um den Piezo-Aktuator nicht zu beschädigen. Der Abstand der Düsenplatte des Druckkopfs 16 zur Folie 2, bzw. zum Substrat 3, sollte 1 mm nicht überschreiten, um die Ablenkung der feinen Klebstofftropfen durch Zugluft zu minimieren.

Das Tropfenvolumen sollte 2 pl bis 50 pl betragen, die Toleranz beträgt ± 6 % des Tropfenvolumens. Damit wird bei einer gegebenen Auflösung die nötige Klebstoffmenge gleichmäßig auf den Bedruckstoff aufgetragen. Die aus dem Tropfen resultierende Pixelgröße ist von der Viskosität der Flüssigkeit abhängig.

Die Tropfengeschwindigkeit sollte im Flug 5 bis 10 m/s betragen und eine Toleranz von höchstens ±5 % aufweisen, damit alle Klebstofftropfen auf dem Bedruckstoff sehr genau nebeneinander landen. Weicht die Tropfengeschwindigkeit der einzelnen Tropfen voneinander zu stark ab, wird dies durch ein unruhiges Druckbild sichtbar.

Für eine optimale Verdruckbarkeit der Flüssigkeit, sollte die Viskosität der zu verdruckenden Flüssigkeit 5 bis 20 mPas betragen, typischerweise 7 mPas bis 9 mPas. Um eine gleichbleibende Viskosität der Flüssigkeit zu gewährleisten, muss der Druckkopf 16 oder das Klebstoffversorgungssystem beheizt sein. Für die entsprechende Viskosität sollte die Klebstofftemperatur im Betrieb 40 bis 45 °C betragen. Durch den Tropfenflug und das Auftreffen auf den Bedruckstoff erhöht sich durch Abkühlen die Viskosität des Klebstofftropfens, vermutlich auf 20 mPas bis 50 mPas. Eine Erhöhung der Viskosität wirkt einem Verlaufen oder Spreiten des Klebstoffs auf dem Bedruckstoff entgegen.

Der eingesetzte Klebstoff ist bevorzugt eine hellgraue UV-härtende Tinte für den Einsatz in Piezo-Drop-on-Demand-Inkjetdruckköpfen 16. Durch einen Energieeintrag in Form von UV-Licht wird in dem Klebstoff eine radikalische Kettenreaktion ausgelöst. Dabei verbinden sich Polymere und Monomere zu einem festen Netz aus Molekülen. Der Klebstoff wird hart oder trocken. Durch UV-Licht in einem Wellenlängenbereich von 350 bis 400 nm ± 10 nm wird die Kettenreaktion ausgelöst.

Der wesentliche Unterschied zwischen kationisch härtenden Klebstoffen und dem hier verwendeten radikalisch-härtenden System besteht darin, dass der kationische Mechanismus wesentlich langsamer abläuft, d. h. die Durchhärtung dauert länger. Für eine Folienapplikation wird jedoch ein schnellhärtendes System benötigt, da die Folie 2 sonst nicht vollständig appliziert werden könnte. Bei der UV-Bestrahlung kationischer Klebstoffe bildet sich zudem eine Säure, die für die Durchhärtung des Klebstoffs verantwortlich ist. Aufgrund dieses Mechanismus müssen Bedruckstoffe zunächst auf Verträglichkeit für kationische Systeme überprüft werden, da alkalische oder basische Substanzen mancher Substratoberflächen die Durchhärtung des Klebstoffs beeinflussen oder verhindern können. Dies ist hier nicht notwendig.

Bevorzugt weist der Klebstoff die folgende Zusammensetzung auf:

| | |
|---|---|
| 2-Phenoxyethylacrylat | 10% bis 60%, bevorzugt 25% bis 50%; |
| 4-(1-Oxo-2-propenyl)-Morpholin | 5% bis 40%, bevorzugt 10% bis 25%; |
| Exo-1,7,7-trimethylbicyclo[2.2.1]-hept-2-ylacrylat | 10% bis 40 %, bevorzugt 20% bis 25%; |
| 2,4,6-Trimethylbenzoyldiphenylphosphinoxid | 5% bis 35%, bevorzugt 10% bis 25%; |
| Dipropylenglykoldiacrylat | 1% bis 20%, bevorzugt 3% bis 10%; |
| Urethanacrylatoligomer | 1% bis 20%, bevorzugt 1% bis 10%; |
| Rußpigment | 0,01%-10%, bevorzugt 0,1 bis 0,5%. |

Bevorzugt findet ein Teilhärten des Klebstoffs (auch UV-Pinning genannt), räumlich und zeitlich nahezu direkt nach dem Druckvorgang auf die Folie 2 statt. Nur so kann das definierte, scharfe Motiv auf der Folie 2 fixiert werden. Diese Fixierung wird durch eine Viskositätserhöhung des Klebstoffs, hervorgerufen durch eine teilweise Auslösung der radikalischen Kettenreaktion, erzeugt.

Räumlich findet die Teilhärtung bevorzugt 1 bis 4 cm nach dem Bedrucken in Maschinenrichtung statt, was einem zeitlichen Abstand in Maschinenrichtung von ca. 0,02 bis 0,25 s (bei 10 bis 30m/min Bahngeschwindigkeit) entspricht.

Die UV-Pinning-Einheit sollte eine Brutto-UV-Bestrahlungsstärke von 2 bis 5 W/cm² leisten, um den nötigen und optimalen Energieeintrag in den Klebstoff zu bringen. 90 % des abgegebenen UV-Lichts sollte im Wellenlängenspektrum zwischen 380 und 420 nm liegen. Diese Anforderung kann nur von LED-UV-Systemen erfüllt werden, da diese Systeme nahezu monochromatisches UV-Licht abgeben und somit das abgegebene Wellenlängenspektrum deutlich näher beieinander liegt als bei herkömmlichen Quecksilber-Mitteldruckdampflampen, bei denen das emittierte Spektrum einen größeren Wellenlängenbereich umfasst. Das Fenster, aus dem die Strahlung austritt, sollte in Maschinenrichtung ca. 10 mm bis 30 mm groß sein, um eine flächige Bestrahlung des Klebstoffs zu ermöglichen.

Je nach Bahn- und Foliengeschwindigkeit von etwa 10 m/min bis 100 m/min, insbesondere etwa 10 m/min bis 75 m/min (oder höher) und durch Absorption und Reflektion von 50 bis 60 % des UV-Lichts durch die Folie wird die auf den Klebstoff durchdringende UV-Dosis (mJ/cm²) verringert. Zusätzlich verringert der Abstand der UV-Pinning-Lampe zu der Folienbahn die abgegebene Bestrahlungsleistung, beispielsweise bei 2 mm Bestrahlungsabstand um ca. 10%. Diese Dosis kann zusätzlich über die Bahngeschwindigkeit angepasst werden, da sich dadurch die Bestrahlungszeit ändert.

Wie bereits beschrieben, hat sich die Viskosität der Klebstofftropfen auf der Folie bereits vor der Teilhärtung durch Abkühlen auf vermutlich 20 mPas bis 50 mPas erhöht. Durch die Teilhärtung wird Viskositätsänderung weiter provoziert.

Nach der Teilhärtung weisen die Tropfen eine Viskosität von vermutlich 50 mPas bis 200 mPas auf, was je nach Schichtdicke des Klebstoffs variieren kann. Dies fixiert den Klebstoff zuverlässig auf dem Bedruckstoff. Das Motiv auf der Folie 2 ist zwar fixiert, aber noch feucht und kann im nächsten Schritt auf das Substrat 3 gedrückt werden.

An dieser Stelle des Prozesses wird die Folie 2 mit dem noch feuchten Klebstoff mit der oben erwähnten Viskosität auf das Substrat 3 angedrückt. Der Druck in Form einer Linienpressung wird durch eine Andruckwalze 131 und eine Gegendruckwalze 132 erzeugt.

Die Andruckwalze 131 sollte aus einem festen Kunststoff oder Gummi mit glatter Oberfläche bestehen und eine Härte von 70 bis 90 Shore-A aufweisen. Die Gegendruckwalze 132 ist bevorzugt aus Stahl ausgebildet und hat eine Härte von 100 Shore-A. Der Radius der Andruckwalze 131 sollte 1 cm bis 20 cm betragen, der der Gegendruckwalze 132 sollte 1 cm bis 20 cm betragen.

Räumlich ist die Walzenanordnung ca. 10 cm bis 30 cm nach der Teilhärtung des Klebstoffs in Maschinenrichtung angeordnet, was einem zeitlichen Abstand von ca. 0,2 bis 1,7 s (bei einer Bahngeschwindigkeit von 10 m/min bis 30m/min) entspricht. Die Linienpressung sollte mit einer Kraft zwischen 10 N bis 80 N erfolgen, je nach Substratbeschaffenheit.

Der feuchte Klebstoff mit der Folie 2 kann auf verschiedene Substrate 3 appliziert werden. Die Folie 2 kann beispielsweise auf Papiersubstrate mit gestrichener und ungestrichener Oberfläche, Naturpapiere, Kunststoffe (PE, PP, PET) und Etikettenmaterialien sowie auch auf Glas oder Keramik appliziert werden. Bei Substraten aus Kunststoff, Glas oder Keramik kann eine Vorbehandlung sinnvoll sein, um die Haftung des Klebstoffs auf dem Substrat 3 zu verbessern, beispielsweise durch Coronabehandlung, Plasmabehandlung oder Beflammen). Das Applikationsergebnis ist dabei bei glatteren Substratoberflächen besser.

Durch die Teilhärtung und die damit verbundene Viskositätsänderung des Klebstoffs werden die Applikationsergebnisse jedoch auch auf rauen Substraten 3 im Vergleich zum herkömmlichen Verfahren ohne Viskositätsänderung deutlich verbessert. Nach dem Andrücken der Folie 2 auf das Substrat 3 verweilt die Folie 2 mit dem noch feuchten Klebstoff auf dem Substrat 3, bis der Klebstoff durchgehärtet wird und die Trägerlage der Folie 2 abgezogen wird.

Ähnlich wie anhand der Vorhärtung des Klebstoffs beschrieben, erfolgt nach der Applikation der Folie 2 auf das Substrat 3 die endgültige Aushärtung (Postcuring) des Klebstoffs mit der Folie 2 auf dem Substrat 3. Die Folie 2 liegt bei diesem Schritt sehr eng auf dem noch feuchten Klebstoff auf dem Substrat 3 an und kann durch Durchhärten des Klebstoffs eine feste und glatte Verbindung mit dem Substrat 3 eingehen.

Die Durchhärtung erfolgt mit einer starken LED-UV-Lampe, die eine hohe Bestrahlungsleistung liefert und für eine vollständige radikalische Kettenreaktion innerhalb des Klebstoffs sorgt. Die Gründe für die Verwendung eines LED-UV-Systems und die Faktoren für die Bestrahlungsleistung wurden bereits anhand der Vorhärtung beschrieben und sind auch für diesen Prozessschritt gültig.

Die Durchhärtung erfolgt räumlich ca. 10 bis 30 cm nach der Folienapplikation in Maschinenrichtung, was einem zeitlichen Abstand von ca. 0,2 s bis 1,7 s (bei einer Bahngeschwindigkeit von 10 m/min bis 30m/min) nach der Applikation.

Der Abstand der Lampe zu der Folien-Substratbahn beträgt bevorzugt 1 mm bis 10 mm, um eine optimale Durchhärtung zu erreichen, gleichzeitig aber physikalischen Kontakt der Lampe zum Substrat 3 zu vermeiden.

Das Bestrahlungsfenster der Lampe sollte in Maschinenrichtung 20 mm bis 40 mm groß sein. Die Brutto-UV-Bestrahlungsstärke sollte zwischen 12 W/cm² und 20 W/cm² liegen, damit der Klebstoff bei Geschwindigkeiten 10 m/min bis 30 m/min (oder höher) und den anderen, bereits oben erwähnten Faktoren, vollständig durchgehärtet wird.

Zu beachten ist, dass diese Werte nur theoretisch möglich sind (bei 100 % Lampenleistung). Bei voller Leistung der UV-Lampe, z.B. bei einer 20 W/cm²-Version, und einer geringen Bahngeschwindigkeit, z.B. 10 m/min, erhitzt sich die Folien-Substratbahn so stark, dass sie Feuer fangen kann. Nach der Durchhärtung haftet die Folie 2 vollständig auf dem Klebstoff und der Klebstoff vollständig auf dem Substrat 3. Die Trägerlage der Folie 2 kann nun abgezogen werden.

Die Ablösung der Trägerlage findet räumlich bevorzugt ca. 10 cm bis 30 cm nach der Durchhärtung in Maschinenrichtung statt, was einem zeitlichen Abstand von ca. 0,2 s bis 1,7 s (bei einer Bahngeschwindigkeit von 10 m/min bis 30 m/min) entspricht. Die abzulösende Trägerlage wird bevorzugt über eine Ablösekante geleitet, welche durch ein Luftpolster eine berührungslose Ablösung des Trägers ermöglicht. Das Substrat 3 ist nun fertig veredelt.

Die abgelöste Trägerlage mit dem verbliebenen, nicht abgeprägten Bereichen der Übertragungslage kann nun wie beschrieben aufgerollt, umgespult und einem weiteren Prägedurchgang zugeführt werden.

### Bezugszeichenliste

- 1: Vorrichtung
- 11: Sensor
- 12: Sensor
- 13: Walzenanordnung
- 131: Andruckwalze
- 132: Gegendruckwalze
- 14: Zugwerk
- 15: Zugwerk
- 16: Druckkopf
- 17: Sensor
- 18: Umlenkrolle
- 2: Folie
- 21: Passermarke (auf Folie)
- 3: Substrat
- 31: Passermarke (auf Substrat)
- S1... S4: Verfahrensschritte

## Patentansprüche

1. Verfahren zum Applizieren einer Übertragungslage einer Folie auf ein Substrat, mit den Schritten:
a) bereichsweises Aufbringen eines radikalisch härtbaren Klebstoffs auf die Übertragungslage und/oder das Substrat mittels eines Tintenstrahldruckkopfs;
b) Vorhärten des Klebstoffs durch UV-Bestrahlung;
c) Aufbringen der Übertragungslage auf das Substrat mittels einer Prägevorrichtung;
d) Aushärten des Klebstoffs durch UV-Bestrahlung;
e) Abziehen einer Trägerlage der Folie, wobei zumindest ein erster Teilbereich der Übertragungslage auf einem Applikationsbereich des Substrats verbleibt und zumindest ein zweiter Teilbereich der Übertragungslage auf der Trägerlage verbleibt;
f) Aufrollen oder Umspulen der Trägerlage mit dem verbliebenen zweiten Teilbereich der Übertragungslage;
g) Applizieren zumindest eines weiteren Teilbereichs der auf der Trägerlage verbliebenen Übertragungslage auf das Substrat durch zumindest einmaliges Wiederholen der Schritte a) bis f); wobei eine Dehnung der Folie mittels einer Transporteinrichtung auf einen Wert von 1 %o bis 6 %o eingestellt wird.

2. Verfahren nach Anspruch 1,
**dadurch gekennzeichnet,**
**dass** das Verfahren die folgenden zusätzlichen Schritte umfasst:
- Aufbringen eines thermoplastischen Toners auf zumindest einen Teilbereich des Substrats und/oder auf zumindest einen Teilbereich einer Übertragungslage einer weiteren Folie;
- Aufbringen der Übertragungslage auf das Substrat;
- Einwirken eines Anpressdruckes und von Wärme auf die Übertragungslage und/oder das Substrat;
- Abziehen einer Trägerlage der Folie von dem zumindest einen Teilbereich der Übertragungslage.

3. Verfahren zum Applizieren einer Übertragungslage einer Folie auf ein Substrat, mit den Schritten:
a) Aufbringen eines thermoplastischen Toners auf zumindest einen Teilbereich des Substrats und/oder auf zumindest einen Teilbereich der Übertragungslage der Folie;
b) Aufbringen der Übertragungslage auf das Substrat mittels einer Prägevorrichtung;
c) Einwirken eines Anpressdruckes und von Wärme auf die Übertragungslage und/oder das Substrat
d) Abziehen einer Trägerlage der Folie, wobei zumindest ein erster Teilbereich der Übertragungslage auf einem Applikationsbereich des Substrats verbleibt und zumindest ein zweiter Teilbereich der Übertragungslage auf der Trägerlage verbleibt;
e) Aufrollen oder Umspulen der Trägerlage mit dem verbliebenen zweiten Teilbereich der Übertragungslage;
f) Applizieren zumindest eines weiteren Teilbereichs der auf der Trägerlage verbliebenen Übertragungslage auf das Substrat durch zumindest einmaliges Wiederholen der Schritte a) bis e); wobei eine Dehnung der Folie mittels einer Transporteinrichtung auf einen Wert von 1 %o bis 6 %o eingestellt wird.

4. Verfahren nach Anspruch 3,
**dadurch gekennzeichnet,**
**dass** das Verfahren die folgenden zusätzlichen Schritte umfasst:
a) Aufbringen einer radikalisch härtbaren Klebstoffs auf zumindest einen Teilbereich der Übertragungslage mittels eines Tintenstrahldruckkopfs;
b) Vorhärten des Klebstoffs durch UV-Bestrahlung;
c) Aufbringen des zumindest einen mit Klebstoff versehenen Teilbereichs der Übertragungslage auf das Substrat;
d) Aushärten des Klebstoffs durch UV-Bestrahlung;
e) Abziehen einer Trägerlage der Folie von dem zumindest einen Teilbereich der Übertragungslage.

5. Verfahren nach einem der vorhergehenden Ansprüche,
**dadurch gekennzeichnet,**
**dass** mittels zumindest eines ersten Sensors ein Positionierungsmerkmal auf der Folie und/oder einer Transportvorrichtung für die Folie detektiert wird und zumindest eine erste Positionsinformation bezüglich der Folie erzeugt wird, insbesondere dass die erste Positionsinformation eine Lage und/oder Ausdehnung der auf der Trägerlage verbliebenen Übertragungslage umfasst.

6. Verfahren nach einem der vorhergehenden Ansprüche,
**dadurch gekennzeichnet,**
**dass** mittels zumindest eines zweiten Sensors ein Positionierungsmerkmal auf dem Substrat und/oder einer Transportvorrichtung für das Substrat detektiert wird und zumindest eine zweite Positionsinformation bezüglich des Substrats erzeugt wird.

7. Verfahren nach einem der Ansprüche 1 oder 2,
**dadurch gekennzeichnet,**
**dass** mittels zumindest eines dritten Sensors ein Positionierungsmerkmal auf der Folie und/oder einer Transportvorrichtung für die Folie im Bereich des Tintenstrahldruckkopfs detektiert wird und zumindest eine dritte Positionsinformation bezüglich der Folie erzeugt wird.

8. Verfahren nach einem der Ansprüche 1 oder 2 und einem der Ansprüche 5 bis 7,
**dadurch gekennzeichnet,**
**dass** zumindest eine der Positionsinformationen auf Grundlage vorher an die Transportvorrichtung für das Substrat und/oder die Transportvorrichtung für die Folie und/oder den Tintenstrahldruckkopf übermittelter Steuerbefehle erzeugt und/oder korrigiert und/oder verifiziert wird, und/oder
**dass** der zumindest eine Teilbereich und/oder der zumindest eine weitere Teilbereich in Abhängigkeit von zumindest einer der Positionsinformationen in eine definierte Relativlage zum Tintenstrahldruckkopf und/oder zu dem Applikationsbereich des Substrats gebracht wird.

9. Verfahren nach einem der Ansprüche 1 oder 2,
**dadurch gekennzeichnet,**
**dass** eine Dehnung der Folie mittels der Transporteinrichtung auf einen Wert von 3 %o eingestellt wird, insbesondere dass zum Einstellen der definierten Relativlage zwischen Folie und Substrat und/oder Tintenstrahldruckkopf die Dehnung der Folie mittels der Transporteinrichtung auf Grundlage zumindest einer der Positionsinformationen variiert wird.

10. Verfahren nach einem der Ansprüche 1 oder 2,
**dadurch gekennzeichnet,**
**dass** das Vorhärten des Klebstoffs mit UV-Licht erfolgt, dessen Energie zu mindestens 90% im Wellenlängenbereich zwischen 380 nm und 420 nm abgestrahlt wird, und/oder
**dass** das Vorhärten des Klebstoffs mit einer Brutto-Bestrahlungsstärke von 2 W/cm² bis 5 W/cm² und/oder insbesondere einer Netto-Bestrahlungsstärke von 0,7 W/cm² bis 2 W/cm² und/oder einem Energieeintrag in den Klebstoff von 8 mJ/cm² bis 112 mJ/cm² erfolgt, und/oder
**dass** das Vorhärten des Klebstoffs mit einer Belichtungszeit von 0,02 s bis 0,056 s erfolgt, und/oder
**dass** sich beim Vorhärten des Klebstoffs dessen Viskosität auf 50 mPas bis 200 mPas erhöht.

11. Verfahren nach einem der Ansprüche 1 oder 2,
**dadurch gekennzeichnet,**
**dass** das Aufbringen des zumindest einen mit Klebstoff versehenen Teilbereichs der Übertragungslage auf das Substrat mit einem Anpressdruck von 10 N bis 80 N erfolgt, und/oder dass das Aufbringen des zumindest einen mit Klebstoff versehenen Teilbereichs der Übertragungslage auf das Substrat 0,2 s bis 1,7 s nach dem Vorhärten des Klebstoffs erfolgt, und/oder
**dass** das Substrat vor dem Aufbringen des zumindest einen mit Klebstoff versehenen Teilbereichs der Übertragungslage vorbehandelt wird, insbesondere durch eine Koronabehandlung, eine Plasmabehandlung oder durch Beflammen.

## Claims

1. Method for applying a transfer ply of a film onto a substrate, having the following steps:
a) regionally applying a radically curable adhesive onto the transfer ply and/or the substrate by means of an inkjet printing head;
b) pre-curing the adhesive by means of UV radiation;
c) applying the transfer ply onto the substrate by means of a stamping device;
d) curing the adhesive by means of UV radiation;
e) removing a transfer ply of the film, wherein at least one first partial region of the transfer ply remains on an application region of the substrate, and at least one second partial region of the transfer ply remains on the carrier ply;
f) unfurling or rewinding the transfer ply with the remaining second partial region of the transfer ply;
g) applying at least one further partial region of the transfer ply remaining on the carrier ply onto the substrate by repeating steps a) to f) at least once;
wherein an extension of the film is set to a value of from 1‰ to 6‰ by means of a transport device.

2. Method according to claim 1,
**characterised in that**
the method comprises the following additional steps:
- applying a thermoplastic toner to at least one partial region of the substrate and/or to at least one partial region of a transfer ply of a further film;
- applying the transfer ply onto the substrate;
- a pressing pressure and heat acting on the transfer ply and/or the substrate;
- removing a carrier ply of the film from the at least one partial region of the transfer ply.

3. Method for applying a transfer ply of a film onto a substrate, having the following steps:
a) applying a thermoplastic toner onto at least one partial region of the substrate and/or onto at least one partial region of the transfer ply of the film;
b) applying the transfer ply onto the substrate by means of a stamping device;
c) a pressing pressure and heat acting on the transfer ply and/or the substrate
d) removing a transfer ply of the film, wherein at least one first partial region of the transfer ply remains on an application region of the substrate, and at least one second partial region of the transfer ply remains on the carrier ply;
e) unfurling or rewinding of the carrier ply with the remaining second partial region of the transfer ply;
f) applying at least one further partial region of the transfer ply remaining on the carrier ply onto the substrate by repeating steps a) to e) at least once;
wherein an extension of the film is set to a value of from 1‰ to 6‰ by means of a transport device.

4. Method according to claim 3,
**characterised in that**
the method comprises the following additional steps:
a) applying a radically curable adhesive onto at least one partial region of the transfer ply by means of an inkjet printing head;
b) pre-curing the adhesive by means of UV radiation;
c) applying the at least one partial region, provided with adhesive, of the transfer ply onto the substrate;
d) curing the adhesive by means of UV radiation;
e) removing a carrier ply of the film from the at least one partial region of the transfer ply.

5. Method according to one of the preceding claims,
**characterised in that**
a positioning feature on the film and/or a transport device for the film is detected by means of at least one first sensor, and at least one piece of first position information relating to the film is generated, in particular the piece of first position information comprises a position and/or extension of the transfer ply remaining on the carrier ply.

6. Method according to one of the preceding claims,
**characterised in that**
a positioning feature on the substrate and/or a transport device for the substrate is detected by means of at least one second sensor, and at least one piece of second position information relating to the substrate is generated.

7. Method according to one of claims 1 or 2,
**characterised in that**
a positioning feature on the film and/or a transport device for the film is detected in the region of the inkjet printing head by means of at least one third sensor, and at least one piece of third position information relating to the film is generated.

8. Method according to one of claims 1 or 2 and one of claims 5 to 7,
**characterised in that**
at least one of the pieces of position information is generated and/or corrected and/or verified on the basis of control commands conveyed in advance to the transport device for the substrate and/or the transport device for the film and/or the inkjet printing head, and/or
the at least one partial region and/or the at least one further partial region is brought into a defined position relative to the inkjet printing head and/or to the application region of the substrate depending on at least one of the pieces of position information.

9. Method according to one of claims 1 or 2,
**characterised in that**
an extension of the film is set to a value of 3‰ by means of the transport device, in particular,
the extension of the film is varied by means of the transport device on the basis of at least one of the pieces of position information to set the defined relative position between the film and substrate and/or inkjet printing head.

10. Method according to one of claims 1 or 2,
**characterised in that**
the pre-curing of the adhesive is carried out with UV light, the energy of which is irradiated at at least 90% in the wavelength range of between 380nm and 420nm, and/or
the pre-curing of the adhesive is carried out with a gross irradiation strength of from 2 W/cm² to 5 W/cm², and/or in particular a net irradiation strength of from 0.7 W/cm² to 2 W/cm² and/or an energy input in the adhesive of from 8 mJ/cm² to 112 mJ/cm², and/or
the pre-curing of the adhesive is carried out with an exposure time of from 0.02s to 0.056s, and/or,
when pre-curing the adhesive, its viscosity is increased to 50 mPas to 200 mPas.

11. Method according to one of claims 1 or 2,
**characterised in that**
the application of the at least one partial region, provided with adhesive, of the transfer ply onto the substrate is carried out with a pressing pressure of from 10N to 80N, and/or
the application of the at least one partial region, provided with adhesive, of the transfer ply onto the substrate is carried out 0.2s to 1.7s after pre-curing the adhesive, and/or
the substrate is pre-treated before the application of the at least one partial region, provided with adhesive, of the transfer ply, in particular by means of a corona treatment, a plasma treatment or by flame treatment.

## Revendications

1. Procédé d'application d'une couche de transfert d'un film sur un substrat, avec les étapes suivantes :
a) l'application par endroits d'une colle durcissable radicalement sur la couche de transfert et/ou le substrat au moyen d'une tête d'impression à jet d'encre ;
b) le prédurcissement de la colle par rayonnement UV ;
c) l'application de la couche de transfert sur le substrat au moyen d'un dispositif d'estampage ;
d) le durcissement de la colle par rayonnement UV ;
e) le retrait d'une couche de support du film, dans lequel au moins une première zone partielle de la couche de transfert reste sur une zone d'application du substrat et au moins une seconde zone partielle de la couche de transfert reste sur la couche de support ;
f) l'enroulement ou le bobinage de la couche de support avec la seconde zone partielle restante de la couche de transfert ;
g) l'application d'au moins une autre zone partielle de la couche de transfert restante sur la couche de support sur le substrat par au moins une répétition des étapes a) à f) ;
dans lequel un allongement du film est réglé au moyen d'un dispositif de transport à une valeur de 1 ‰ à 6 ‰.

2. Procédé selon la revendication 1,
**caractérisé en ce**
**que** le procédé comporte les étapes supplémentaires suivantes :
- l'application d'un toner thermoplastique sur au moins une zone partielle du substrat et/ou sur au moins une zone partielle d'une couche de transfert d'un autre film ;
- l'application de la couche de transfert sur le substrat ;
- l'action d'une pression de serrage et de chaleur sur la couche de transfert et/ou le substrat ;
- le retrait d'une couche de support du film de l'au moins une zone partielle de la couche de transfert.

3. Procédé d'application d'une couche de transfert d'un film sur un substrat, avec les étapes suivantes :
a) l'application d'un toner thermoplastique sur au moins une zone partielle du substrat et/ou sur au moins une zone partielle de la couche de transfert du film ;
b) l'application de la couche de transfert sur le substrat au moyen d'un dispositif d'estampage ;
c) l'action d'une pression de serrage et de chaleur sur la couche de transfert et/ou le substrat
d) le retrait d'une couche de support du film, dans lequel au moins une première zone partielle de la couche de transfert reste sur une zone d'application du substrat et au moins une seconde zone partielle de la couche de transfert reste sur la couche de support ;
e) l'enroulement ou le bobinage de la couche de support avec la seconde zone partielle restante de la couche de transfert ;
f) l'application d'au moins une autre zone partielle de la couche de transfert restante sur la couche de support sur le substrat par au moins une répétition des étapes a) à e) ;
dans lequel un allongement du film est réglé au moyen d'un dispositif de transport à une valeur de 1 ‰ à 6 ‰.

4. Procédé selon la revendication 3,
**caractérisé en ce**
**que** le procédé comporte les étapes supplémentaires suivantes :
a) l'application d'une colle durcissable radicalement sur au moins une zone partielle de la couche de transfert au moyen d'une tête d'impression à jet d'encre ;
b) le prédurcissement de la colle par rayonnement UV ;
c) l'application d'au moins une zone partielle pourvue de colle de la couche de transfert sur le substrat ;
d) le durcissement de la colle par rayonnement UV ;
e) le retrait d'une couche de support du film de l'au moins une zone partielle de la couche de transfert.

5. Procédé selon l'une quelconque des revendications précédentes,
**caractérisé en ce**
**qu'**au moyen d'au moins un premier capteur une caractéristique de positionnement est détectée sur le film et/ou un dispositif de transport pour le film et au moins une première information de position par rapport au film est générée, en particulier en ce que la première information de position comporte une couche et/ou extension de la couche de transfert restante sur la couche de support.

6. Procédé selon l'une quelconque des revendications précédentes,
**caractérisé en ce**
**qu'**au moyen d'au moins un deuxième capteur une caractéristique de positionnement est détectée sur le substrat et/ou un dispositif de transport pour le substrat et au moins une deuxième information de position par rapport au substrat est générée.

7. Procédé selon l'une quelconque des revendications 1 ou 2,
**caractérisé en ce**
**qu'**au moyen d'au moins un troisième capteur une caractéristique de positionnement est détectée sur le film et/ou un dispositif de transport pour le film dans la zone de la tête d'impression à jet d'encre et au moins une troisième information de position par rapport au film est générée.

8. Procédé selon l'une quelconque des revendications 1 ou 2 et l'une quelconque des revendications 5 à 7,
**caractérisé en ce**
**qu'**au moins une des informations de position est générée et/ou corrigée et/ou vérifiée sur la base d'ordres de commande transmis précédemment au dispositif de transport pour le substrat et/ou le dispositif de transport pour le film et/ou la tête d'impression à jet d'encre, et/ou
**que** l'au moins une zone partielle et/ou l'au moins une autre zone partielle est appliquée en fonction d'au moins une des informations de position dans une position relative définie par rapport à la tête d'impression à jet d'encre et/ou à la zone d'application du substrat.

9. Procédé selon l'une quelconque des revendications 1 ou 2,
**caractérisé en ce**
**qu'**un allongement du film est réglé au moyen du dispositif de transport à une valeur de 3 ‰, en particulier
**que** pour le réglage de la position relative définie entre le film et le substrat et/ou la tête d'impression à jet d'encre l'allongement du film est varié au moyen du dispositif de transport sur la base d'au moins une des informations de position.

10. Procédé selon l'une quelconque des revendications 1 ou 2,
**caractérisé en ce**
**que** le prédurcissement de la colle est effectué avec une lumière UV, dont l'énergie est rayonnée à au moins 90 % dans la plage de longueur d'onde entre 380 nm et 420 nm, et/ou
**que** le prédurcissement de la colle est effectué avec une intensité de rayonnement brute de 2 W/cm² à 5 W/cm² et/ou en particulier une intensité de rayonnement nette de 0,7 W/cm² à 2 W/cm² et/ou un apport d'énergie dans la colle de 8 mJ/cm² à 112 mJ/cm², et/ou
**que** le prédurcissement de la colle est effectué avec un temps d'exposition de 0,02 s à 0,056 s, et/ou
**que** lors du prédurcissement de la colle sa viscosité augmente à 50 mPa à 200 mPa.

11. Procédé selon l'une quelconque des revendications 1 ou 2,
caractérisé en ce
l'application d'au moins une zone partielle pourvue de colle de la couche de transfert sur le substrat est effectuée avec une pression de serrage de 10 N à 80 N, et/ou
que l'application d'au moins une zone partielle pourvue de colle de la couche de transfert sur le substrat est effectuée de 0,2 s à 1,7 s après le prédurcissement de la colle, et/ou
que le substrat est prétraité avant l'application d'au moins une zone partielle pourvue de colle de la couche de transfert, en particulier par un traitement corona, un traitement au plasma ou par flambage.
